(19) Europäisches Patentamt / European Patent Office / Office européen des brevets

(11) **EP 4 597 872 A1**

(12) **EUROPEAN PATENT APPLICATION**

(43) Date of publication:
06.08.2025 Bulletin 2025/32

(21) Application number: 25155344.2

(22) Date of filing: 31.01.2025

(51) International Patent Classification (IPC):
*H04B 7/06* (2006.01)

(52) Cooperative Patent Classification (CPC):
H04B 7/06952

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.02.2024 GB 202401372

(71) Applicant: Nokia Technologies Oy
02610 Espoo (FI)

(72) Inventors:
• KOSKELA, Timo
Oulu (FI)

• LADDU, Keeth Saliya Jayasinghe
Espoo (FI)
• KARJALAINEN, Juha Pekka
Sotkamo (FI)
• HAKOLA, Sami-Jukka
Oulu (FI)
• ENESCU, Mihai
Espoo (FI)

(74) Representative: Nokia EPO representatives
Nokia Technologies Oy
Karakaari 7
02610 Espoo (FI)

(54) **BEAM PREDICTION**

(57) Methods, apparatus and systems are provided for beam prediction and means for measuring a first set of reference signal resources of a configured set of reference signal resources for respective beams of a network entity for use in determining at least one predicted beam, wherein the configured set of reference signal resources are associated with prediction-based beam reporting or prediction-based beam switching; means for receiving from the network entity an indication that a target transmission configuration indicator, TCI, state corresponding to the at least one predicted beam is to be activated or indicated; means for determining, based on at least one of: the at least one predicted beam and the measured first set of reference signal resources, whether the target TCI state is known or unknown; and means for switching to the target TCI state within a time period based on a determination indicating the target TCI state is known.

FIG. 2

## Description

### Field

Example embodiments relate to beam prediction and determining a known or unknown status of a target transmission configuration indicator, TCI, state corresponding to at least one predicted beam.

### Background

The Third Generation Partnership Project (3GPP) has and is developing standards for Fourth Generation (4G), also known as Long Term Evolution (LTE), and Fifth Generation (5G), also known as New Radio (NR), communications systems. In relation to 5G NR communications systems, and future communications systems, throughput and network capacity can be increased by using massive Multiple Input and Multiple Output (MIMO) technologies with beamforming, whereby a network entity can establish and communicate over relatively narrow beams directed towards individual user terminals.

The process of determining which beam or beams to use may generally be referred to as beam management.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an apparatus comprising: means for measuring a first set of reference signal resources of a configured set of reference signal resources for respective beams of a network entity for use in determining at least one predicted beam, wherein the configured set of reference signal resources are associated with prediction-based beam reporting or prediction-based beam switching; means for receiving from the network entity an indication that a target transmission configuration indicator, TCI, state corresponding to the at least one predicted beam is to be activated or indicated;

means for determining, based on at least one of: the at least one predicted beam and the measured first set of reference signal resources, whether the target TCI state is known or unknown; and means for switching to the target TCI state within a time period based on a determination indicating the target TCI state is known.

In some example embodiments, wherein the configured set of reference signal resources are configured by the network entity.

In some example embodiments, the apparatus further comprising means for receiving from the network entity a message for triggering the apparatus to perform the prediction-based beam reporting or the prediction-based beam switching, wherein the measuring is performed at or after receiving the message.

In some example embodiments, the means for measuring is further configured to measure the first set of reference signal resources for a first group of beams for determining the at least one predicted beam from a second group of beams using a model, wherein the model performs an inference operation for providing data representative of an indication of the at least one predicted beam.

In some example embodiments, the apparatus further comprising: means for inputting data representative of the measured first set reference signal resources to the model; and means for reporting data representative of the indication of the at least one predicted beam to the network entity, wherein at least one reference signal resource of the configured set of reference signal resources is associated with the at least one predicted beam.

In some example embodiments, the apparatus further comprising: means for reporting the measured first set reference signal resources to the network entity for input by the network entity to the model. In some example embodiments, the apparatus, further comprising: means for receiving data representative of an indication of the at least one predicted beam.

In some example embodiments, wherein the means for determining whether the target TCI state is known or unknown, further comprising: means for determining that one or more predicted quality metrics of one or more reference signal resources associated with corresponding reported predicted beams are greater than or equal to a preconfigured or predefined quality threshold level; in response to determining that at least one of the one or more predicted quality metrics of said one or more reference signal resources associated with corresponding reported predicted beams is greater than or equal to the preconfigured or predefined quality threshold level, determining that the target TCI state is known when said one or more reference signal resources corresponds to a reference signal resource associated with the target TCI state.

In some example embodiments, wherein the quality metric comprises one or more from the group of: reference signal received power, RSRP; L1 physical layer RSRP, L1-RSRP; signal to noise ratio, SNR, of a reference signal resource; any other quality metric associated with a reference signal resource.

In some example embodiments, wherein the means for determining whether the target TCI state is known or unknown, further comprising: means for determining that one or more current model performance metrics corresponding to one or more of the reported predicted beams associated with one or more reference signal resources, respectively, are greater than or equal to a preconfigured or predefined model performance threshold level; in response to determining that at least one of the one or more current model performance metrics of said one or more of the reported predicted beams associated with one or more reference signal resources, respectively, is greater than or equal to the preconfigured or predefined model performance threshold level, determining that the target TCI state is known when said one or more reference signal resources corresponds to a reference signal resource associated with the target TCI state.

In some example embodiments, wherein the model performance metric comprises one or more from the group of: model prediction accuracy metrics; precision and recall metrics; area under the curve receiver operating curve, AUC-ROC, metrics; model confidence metric; probability score metric; any other model performance metric for evaluating the prediction performance of the model.

In some example embodiments, wherein the means for switching to the target TCI state within the time period based on the determination the target TCI state is known further comprising one or more of: performing the TCI state switch within the time period according to the known target TCI state, wherein the time period is calculated based on omitting an L1-RSRP measurement time period required for L1-RSRP measurement of the reference signal resources of the target TCI state; or performing the TCI state switch within the time period according to the known target TCI state, wherein the time period is calculated based on determining that at least one L1-RSRP measurement or measurement sample has been obtained in relation to the reference signal resources of the target TCI state.

In some example embodiments, wherein, when the apparatus is configured to perform prediction-based beam reporting or prior to prediction-based beam switching, the means for measuring is further configured to: trigger measuring, after reporting data representative of an indication of the one or more predicted beams, of at least one of the reference signal resources associated with at least one of the predicted beams, wherein said measuring of the at least one of the reference signal resource associated with the at least one of the predicted beams is performed based on one or more from the group of: measuring a reference signal resource associated with at least one predicted beam in a first slot of the particular reference signal resource occurring after reporting the predicted beam associated with the reference signal resource; or measuring a reference signal resource associated with at least one predicted beam within a predetermined or specified time period after reporting the predicted beam associated with the reference signal resource.

In some example embodiments, wherein after measuring the reference signal associated with the at least one predicted beam, performing prediction-based beam switching based on whether the target TCI state is known.

In some example embodiments, wherein the measurement of the at least one measured reference signal resource is an L1 physical layer measurement; and/or the L1 physical layer measurement is a reference signal resource received power, RSRP, measurement.

In some example embodiments, wherein, when the apparatus is configured to perform prediction-based beam reporting, the means for determining whether the target TCI state is known or unknown, further comprising: means for determining that a reference signal resource of the first set is associated with a corresponding reported predicted beam; and means for determining that the target TCI state is known when said reference signal resource of the first set of reference signals corresponds to a reference signal resource associated with the target TCI state.

In some example embodiments, the means for determining whether the target TCI state is known or unknown further comprising means for determining, based on one or more conditions associated with at least one of: the at least predicted beam and the measured first set of reference signal resources, whether the target TCI state is known or unknown.

In some example embodiments, the one or more conditions further comprising: the target TCI state is known if it is determined that at least one measured reference signal resource of the first set of reference signal resources corresponds to: a reference signal included in or associated with the target TCI state; or a reference signal received from a source in quasi co-location with the source of said reference signal included in or associated with the target TCI state; or a reference signal corresponding to the at least one reference signal included in or associated with the target TCI state that has a quality metric above a preconfigured or predefined quality threshold level.

In some example embodiments, the one or more conditions further comprising: the target TCI state is known if a predicted quality metric of a reference signal of the at least one predicted beam corresponding to a reference signal included in or associated with the target TCI state is greater than or equal to a preconfigured or predefined quality threshold level.

In some example embodiments, the apparatus is configured to: perform monitoring of the prediction accuracy, wherein the monitoring of prediction accuracy is based on the measurements of one or more reference signal resources corresponding to one or more previously predicted beams; and determine a prediction accuracy metric for at least one predicted beam based on said monitoring of the previously predicted beams and the indication of the corresponding at least one predicted beam; wherein the one or more conditions further comprises the target TCI state is known if the prediction accuracy metric for the at least one predicted beam is greater than or equal to a prediction accuracy threshold level.

In some example embodiments, the one or more conditions further comprising: the target TCI state is known if a current model performance metric of the model inference operation corresponding to the at least one predicted beam with a reference signal included in or associated with the target TCI state is greater than or equal to a model performance threshold level.

In some example embodiments, the one or more conditions further comprising the target TCI state is known if a current model confidence or probability score metric of the model inference operation corresponding to the at least one predicted beam with a reference signal included in or associated with the target TCI state is greater than or equal to a respective confidence threshold level or probability score threshold level.

In some example embodiments, wherein: the apparatus is configured to set at least one of the monitoring accuracy threshold level, model performance threshold level, confidence threshold level, or probability score threshold level; or the apparatus is configured to receive at least one of the monitoring accuracy threshold level, model performance threshold level, confidence threshold level, or probability score threshold level from the network entity.

In some example embodiments, wherein: the apparatus is configured to report at least one of the monitoring accuracy metric, model performance, model confidence metric, or probability score metric to the network entity; and the apparatus is configured to use at least one of the reported monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, wherein: the apparatus is configured to receive from the network entity at least one of the monitoring accuracy metric, model performance metric, model confidence metric, or probability score metric; and the apparatus is configured to use the currently received monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, wherein, prior to prediction-based beam switching, the means for measuring is further configured to: measure one or more reference signals of a second set of the configured set of reference signal resources associated with the at least one predicted beam.

In some example embodiments, wherein: measuring the one or more reference signals of the second set of the configured set of reference signal resources comprises measuring a reference signal associated with the at least one predicted beam or a reference signal associated with a beam which is received from a source in quasi co-location with the source of said reference signal associated with the at least one predicted beam.

In some example embodiments, wherein: based on measuring at least one reference signal associated with the at least one predicted beam or reference signal associated with a beam which is received from a source in quasi-location with the source of said reference signal associated with the at least one predicted beam, performing prediction-based beam switching based on whether the target TCI state is known.

In some example embodiments, wherein: the measurement of the at least one measured reference signal is an L1 physical layer measurement; and, as an option, the L1 physical layer measurement is a reference signal received power, RSRP, measurement.

In some example embodiments, wherein the one or more conditions further comprising: the target TCI state is known if the indication or activation of the target TCI state is received within a predefined time period after completing reporting data representative the second group of beams comprising the at least one predicted beam to the network entity, and a reference signal associated with the at least one predicted beam corresponds to a reference signal associated with the target TCI state.

In some example embodiments, wherein: the predefined time period is less than the time period for performing the inference operation; or the predefined time period is less than the time period since the latest inference operation; or the predefined time period is greater than the time period used for non-prediction TCI switching.

In some example embodiments, wherein the one or more conditions further comprising: the target TCI state is known if the indication or activation of the target TCI state is received within a number of X milliseconds, seconds, slots, radio frames or symbols after the apparatus completes reporting data representative the second group of beams comprising the indication of the at least one predicted beam to the network entity.

In some example embodiments, wherein the one or more conditions further comprising: the target TCI state is known if the apparatus has performed at least one measurement on a reference signal corresponding to a reference signal associated with the target TCI state or a reference signal received from a source in quasi co-location with the source of said reference signal associated with the target TCI state within a number of N milliseconds, seconds, slots, radio frames or symbols prior to receiving the indication that the target TCI state is indicated or activated.

In some example embodiments, wherein the apparatus comprises means for performing prediction-based beam reporting or prior to prediction-based beam switching, the means for measuring is further configured to: trigger measuring, after reporting data representative of an indication of the one or more predicted beams, of at least one of the reference signal resources associated with at least one of the predicted beams, wherein said measuring of the at least one of the reference signal resource associated with the at least one of the predicted beams is performed based on one or more from the group of: measuring a reference signal resource associated with at least one predicted beam in a first slot of the particular reference signal resource occurring after reporting the predicted beam associated with the reference signal resource; or measuring a reference signal resource associated with at least one predicted beam within a predetermined or specified time period after reporting the predicted beam associated with the reference signal resource.

In some example embodiments, wherein the time periods are in a range of milliseconds, seconds, slots, radio frames or symbols.

In some example embodiments, wherein the apparatus comprises a user terminal.

A second aspect provides a method comprising: measuring, by a terminal apparatus, a first set of reference signal resources of a configured set of reference signal resources for respective beams of a network entity for use in determining at least one predicted beam, wherein the configured set of reference signal resources are associated with prediction-based beam reporting or prediction-based beam switching; receiving from the network entity an indication that a target transmission configuration indicator, TCI, state corresponding to the at least one predicted beam is to be activated or indicated; determining, based on at least one of: the at least one predicted beam and the measured first set of reference signal resources, whether the target TCI state is known or unknown; and switching to the target TCI state within a time period based on a determination indicating the target TCI state is known.

In some example embodiments, wherein the configured set of reference signal resources are configured by the network entity.

In some example embodiments, the method of the second aspect further comprising receiving from the network entity a message for triggering the terminal apparatus to perform the prediction-based beam reporting or the prediction-based beam switching, wherein the measuring is performed at or after receiving the message.

In some example embodiments, the method of the second aspect, wherein measuring is further comprising measuring the first set of reference signal resources for a first group of beams for determining the at least one predicted beam from a second group of beams using a model, wherein the model performs an inference operation for providing data representative of an indication of the at least one predicted beam.

In some example embodiments, the method of the second aspect further comprising inputting data representative of the measured first set reference signal resources to the model; and reporting data representative of the indication of the at least one predicted beam to the network entity, wherein at least one reference signal resource of the configured set of reference signal resources is associated with the at least one predicted beam.

In some example embodiments, the method of the second aspect further comprising reporting the measured first set reference signal resources to the network entity for input by the network entity to the model. In some example embodiments, the method of the second aspect further comprising receiving, from the network entity, data representative of an indication of the at least one predicted beam.

In some example embodiments, the method of the second aspect further comprising transmitting, from the terminal apparatus to the network entity, measurements of the first set of reference signal resources for a first group of beams for determining at least one predicted beam from a second group of beams using a model, wherein the model performs an inference operation for providing data representative of an indication of the at least one predicted beam; and receiving, from the network entity, the indication of the at least one predicted beam for use by the terminal apparatus in determining, based on one or more conditions associated with at least one of: the at least predicted beam and the measured first set of reference signal resources, whether the target TCI state is known or unknown, and switch to the target TCI state based on the determination.

In some example embodiments, the method of the second aspect, wherein determining whether the target TCI state is known or unknown further comprising: determining that one or more predicted quality metrics of one or more reference signal resources associated with corresponding reported predicted beams are greater than or equal to a preconfigured or predefined quality threshold level; in response to determining that at least one of the one or more predicted quality metrics of said one or more reference signal resources associated with corresponding reported predicted beams is greater than or equal to the preconfigured or predefined quality threshold level, determining that the target TCI state is known when said one or more reference signal resources corresponds to a reference signal resource associated with the target TCI state.

In some example embodiments, the method of the second aspect, wherein the quality metric comprises one or more from the group of: reference signal received power, RSRP; L1 physical layer RSRP, L1-RSRP; signal to noise ratio, SNR, of a reference signal resource; any other quality metric associated with a reference signal resource.

In some example embodiments, the method of the second aspect, wherein determining whether the target TCI state is known or unknown further comprising determining that one or more current model performance metrics corresponding to one or more of the reported predicted beams associated with one or more reference signal resources, respectively, are greater than or equal to a preconfigured or predefined model performance threshold level; in response to determining that at least one of the one or more current model performance metrics of said one or more of the reported predicted beams associated with one or more reference signal resources, respectively, is greater than or equal to the preconfigured or predefined model performance threshold level, determining that the target TCI state is known when said one or more reference signal resources corresponds to a reference signal resource associated with the target TCI state.

In some example embodiments, the method of the second aspect, wherein the model performance metric comprises one or more from the group of: model prediction accuracy metrics; precision and recall metrics; area under the curve receiver operating curve, AUC-ROC, metrics; model confidence metric; probability score metric; any other model performance metric for evaluating the prediction performance of the model.

In some example embodiments, the method of the second aspect, wherein switching to the target TCI state within the time period based on the determination the target TCI state is known further comprising one or more of: performing the TCI state switch within the time period according to the known target TCI state, wherein the time period is calculated based on omitting an L1-RSRP measurement time period required for L1-RSRP measurement of the reference signal resources of the target TCI state; or performing the TCI state switch within the time period according to the known target TCI state, wherein the time period is calculated based on determining that at least one L1-RSRP measurement or measurement sample has been obtained in relation to the reference signal resources of the target TCI state.

In some example embodiments, the method of the second aspect, when the terminal apparatus is configured to perform prediction-based beam reporting or prior to prediction-based beam switching, said measuring further comprising: triggering measuring, after reporting data representative of an indication of the one or more predicted beams, of at least one of the reference signal resources associated with at least one of the predicted beams, wherein said measuring of the at least one of the reference signal resource associated with the at least one of the predicted beams is performed based on one or more from the group of: measuring a reference signal resource associated with at least one predicted beam in a first slot of the particular reference signal resource occurring after reporting the predicted beam associated with the reference signal resource; or measuring a reference signal resource associated with at least one predicted beam within a predetermined or specified time period after reporting the predicted beam associated with the reference signal resource.

In some example embodiments, the method of the second aspect, wherein after measuring the reference signal associated with the at least one predicted beam, performing prediction-based beam switching based on whether the target TCI state is known.

In some example embodiments, the method of the second aspect, wherein the measurement of the at least one measured reference signal resource is an L1 physical layer measurement; and/or the L1 physical layer measurement is a reference signal resource received power, RSRP, measurement.

In some example embodiments, the method of the second aspect, wherein, when the terminal apparatus is configured to perform prediction-based beam reporting, said determining whether the target TCI state is known or unknown further comprising: determining that a reference signal resource of the first set is associated with a corresponding reported predicted beam; and determining that the target TCI state is known when said reference signal resource of the first set of reference signals corresponds to a reference signal resource associated with the target TCI state.

In some example embodiments, the method of the second aspect, wherein determining whether the target TCI state is known or unknown further comprising determining, based on one or more conditions associated with at least one of: the at least predicted beam and the measured first set of reference signal resources, whether the target TCI state is known or unknown.

In some example embodiments, the method of the second aspect further comprising receiving, from a network entity, a configuration for measuring a set of reference signal resources for respective beams of a network entity, wherein the set of reference signal resources are associated with prediction-based beam reporting or prediction-based beam switching.

In some example embodiments, the method of the second aspect, wherein the determining whether the target TCI state is known or unknown further comprising determining, based on one or more conditions associated with at least one of: the at least predicted beam and the measured first set of reference signal resources, whether the target TCI state is known or unknown; and switching to the target TCI state based on the determination.

In some example embodiments, the method of the second aspect, wherein the one or more conditions further comprising: the target TCI state is known if it is determined that at least one measured reference signal resource of the first set of reference signal resources corresponds to: a reference signal included in or associated with the target TCI state; or a reference signal received from a source in quasi co-location with the source of said reference signal included in or associated with the target TCI state; or a reference signal corresponding to the at least one reference signal included in or associated with the target TCI state that has a quality metric above a preconfigured or predefined quality threshold level.

In some example embodiments, the method of the second aspect, wherein the one or more conditions further comprising: the target TCI state is known if a predicted quality metric of a reference signal of the at least one predicted beam corresponding to a reference signal included in or associated with the target TCI state is greater than or equal to a preconfigured or predefined quality threshold level.

In some example embodiments, the method of the second aspect, further comprising performing monitoring of the prediction accuracy, wherein the monitoring of prediction accuracy is based on the reported measurements of one or more reference signal resources corresponding to one or more previously predicted beams; and determining a prediction accuracy metric for at least one predicted beam based on said monitoring of the previously predicted beams and the indication of the corresponding at least one predicted beam; wherein the one or more conditions further comprises the target TCI state is known if the prediction accuracy metric for the at least one predicted beam is greater than or equal to a prediction accuracy threshold level.

In some example embodiments, the method of the second aspect, wherein the one or more conditions further comprising: the target TCI state is known if a current model performance metric of the model inference operation corresponding to the at least one predicted beam with a reference signal included in or associated with the target TCI state is greater than or equal to a model performance threshold level.

In some example embodiments, the method of the second aspect, wherein the one or more conditions further comprising the target TCI state is known if a current model confidence or probability score metric of the model inference operation corresponding to the at least one predicted beam with a reference signal included in or associated with the target TCI state is greater than or equal to a respective confidence threshold level or probability score threshold level.

In some example embodiments, the method of the second aspect, further comprising setting at least one of the monitoring accuracy threshold level, model performance threshold level, confidence threshold level, or probability score threshold level; or receiving at least one of the monitoring accuracy threshold level, model performance threshold level, confidence threshold level, or probability score threshold level from the network entity.

In some example embodiments, the method of the second aspect, further comprising reporting at least one of the monitoring accuracy metric, model performance, model confidence metric, or probability score metric to the network entity; and using at least one of the reported monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, the method of the second aspect, further comprising receiving from the network entity at least one of the monitoring accuracy metric, model performance metric, model confidence metric, or probability score metric; and using the currently received monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, wherein, prior to prediction-based beam switching, the means for measuring is further configured to: measure one or more reference signals of a second set of the configured set of reference signal resources associated with the at least one predicted beam.

In some example embodiments, the method of the second aspect, wherein measuring the one or more reference signals of the second set of the configured set of reference signal resources comprises measuring a reference signal associated with the at least one predicted beam or a reference signal associated with a beam which is received from a source in quasi co-location with the source of said reference signal associated with the at least one predicted beam.

In some example embodiments, the method of the second aspect, wherein: based on measuring at least one reference signal associated with the at least one predicted beam or reference signal associated with a beam which is received from a source in quasi-location with the source of said reference signal associated with the at least one predicted beam, performing prediction-based beam switching based on whether the target TCI state is known.

In some example embodiments, the method of the second aspect, wherein the one or more conditions further comprising: the target TCI state is known if the indication or activation of the target TCI state is received within a predefined time period after completing reporting data representative the second group of beams comprising the at least one predicted beam to the network entity, and a reference signal associated with the at least one predicted beam corresponds to a reference signal associated with the target TCI state.

In some example embodiments, the method of the second aspect, wherein: the predefined time period is less than the time period for performing the inference operation; or the predefined time period is less than the time period since the latest inference operation; or the predefined time period is greater than the time period used for non-prediction TCI switching.

In some example embodiments, the method of the second aspect, wherein the one or more conditions further comprising: the target TCI state is known if the indication or activation of the target TCI state is received within a number of X milliseconds, seconds, slots, radio frames or symbols after the apparatus completes reporting data representative the second group of beams comprising the indication of the at least one predicted beam to the network entity.

In some example embodiments, the method of the second aspect, wherein the one or more conditions further comprising: the target TCI state is known if the apparatus has performed at least one measurement on a reference signal corresponding to a reference signal associated with the target TCI state or a reference signal received from a source in quasi co-location with the source of said reference signal associated with the target TCI state within a number of N

milliseconds, seconds, slots, radio frames or symbols prior to receiving the indication that the target TCI state is indicated or activated.

In some example embodiments, the method of the second aspect, wherein the time periods are in a range of milliseconds, seconds, slots, radio frames or symbols.

In some example embodiments, the method of the second aspect, wherein the method may be performed by an apparatus comprising a user terminal. As an option, the method may be performed at a user terminal.

A third aspect of provides a computer program comprising a set of instructions which, when executed on an apparatus, is configured to cause the apparatus to carry out a method comprising: measuring a first set of reference signal resources of a configured set of reference signal resources for respective beams of a network entity for use in determining at least one predicted beam, wherein the configured set of reference signal resources are associated with prediction-based beam reporting or prediction-based beam switching; receiving from the network entity an indication that a target transmission configuration indicator, TCI, state corresponding to the at least one predicted beam is to be activated or indicated; determining, based on at least one of: the at least one predicted beam and the measured first set of reference signal resources, whether the target TCI state is known or unknown; and switching to the target TCI state within a time period based on a determination indicating the target TCI state is known.

In some example embodiments, the third aspect may include any other feature mentioned with respect to the method of the second aspect.

A fourth aspect of the invention provides a non-transitory computer-readable medium having stored thereon computer-readable code, which, when executed by at least one processor, causes the at least one processor to perform a method, comprising: measuring a first set of reference signal resources of a configured set of reference signal resources for respective beams of a network entity for use in determining at least one predicted beam, wherein the configured set of reference signal resources are associated with prediction-based beam reporting or prediction-based beam switching; receiving from the network entity an indication that a target transmission configuration indicator, TCI, state corresponding to the at least one predicted beam is to be activated or indicated; determining, based on at least one of: the at least one predicted beam and the measured first set of reference signal resources, whether the target TCI state is known or unknown; and switching to the target TCI state within a time period based on a determination indicating the target TCI state is known.

In some example embodiments, the fourth aspect may include any other feature mentioned with respect to the method of the second aspect.

A fifth aspect of the invention provides an apparatus, the apparatus having at least one processor and at least one memory having computer-readable code stored thereon which when executed controls the at least one processor to: measure a first set of reference signal resources of a configured set of reference signal resources for respective beams of a network entity for use in determining at least one predicted beam, wherein the configured set of reference signal resources are associated with prediction-based beam reporting or prediction-based beam switching; receive from the network entity an indication that a target transmission configuration indicator, TCI, state corresponding to the at least one predicted beam is to be activated or indicated; determine, based on at least one of: the at least one predicted beam and the measured first set of reference signal resources, whether the target TCI state is known or unknown; and switch to the target TCI state within a time period based on a determination indicating the target TCI state is known..

In some example embodiments, the fifth aspect may include any other feature mentioned with respect to the method of the second aspect.

A sixth aspect provides a network apparatus, comprising: means for transmitting, to a terminal apparatus, a configuration for measuring a first set of reference signal resources for respective beams of the network apparatus for use in determining at least one predicted beam, wherein the configured set of reference signal resources are associated with prediction-based beam reporting or prediction-based beam switching; and means for transmitting, to the terminal apparatus, an indication that a target transmission configuration indicator, TCI, state corresponding to the at least one predicted beam is to be activated or indicated; wherein the target TCI state is, whether or not known or unknown, is determined, based on at least one of: the at least one predicted beam and the first set of reference signal resources, and switching to the target TCI state within a time period based on a determination indicating the target TCI state is known.

In some example embodiments, network apparatus further comprising configuring the configured set of reference signal resources.

In some example embodiments, the network apparatus further comprising means for transmitting to the terminal apparatus a message for triggering the terminal apparatus to perform the prediction-based beam reporting or the prediction-based beam switching, wherein the measuring is performed at or after receiving the message.

In some example embodiments, the network apparatus further comprising means for receiving, from the terminal apparatus, an indication of at least one predicted beam generated by the terminal apparatus inputting measurements of the first set of reference signal resources to a model, wherein the model performs an inference operation for providing data representative of the indication of the at least one predicted beam.

In some example embodiments, the network apparatus, further comprising: means for receiving, from the terminal apparatus, measurements of the first set of reference signal resources for a first group of beams for determining at least one predicted beam from a second group of beams using a model, wherein the model performs an inference operation for providing data representative of an indication of the at least one predicted beam; and means for transmitting, to the terminal apparatus, the indication of the at least one predicted beam for use by the terminal apparatus in determining, based on one or more conditions associated with at least one of: the at least predicted beam and the measured first set of reference signal resources and/or the configured first set of reference signal resources, whether the target TCI state is known or unknown, and switch to the target TCI state within the time period based on a determination indicating the target TCI state is known.

In some example embodiments, the network apparatus further comprising: means for inputting data representative of the measured first set of reference signal resources to the model; and means for reporting data representative of the indication of the at least one predicted beam to the terminal apparatus.

In some example embodiments, the network apparatus, further comprising: means for receiving the measured first set of reference signal resources of the configured reference signal resources from the terminal apparatus for input to the model at the network apparatus.

In some example embodiments, the network apparatus further comprising means for determining, based on at least one of: the at least one predicted beam and the configured first set of reference signal resources, whether the target TCI state is known or unknown, and switching to the target TCI state within the time period based on a determination indicating the target TCI state is known.

In some example embodiments, the network apparatus further comprising means for determining, based on at least one of: the at least one predicted beam and the measured first set of reference signal resources received from the terminal apparatus, whether the target TCI state is known or unknown, and switching to the target TCI state within the time period based on a determination indicating the target TCI state is known.

In some example embodiments, wherein the means for determining whether the target TCI state is known or unknown, further comprising: means for determining that one or more predicted quality metrics of one or more reference signal resources associated with corresponding predicted beams are greater than or equal to a preconfigured or predefined quality threshold level; in response to determining that at least one of the one or more predicted quality metrics of said one or more reference signal resources associated with corresponding reported predicted beams is greater than or equal to the preconfigured or predefined quality threshold level, determining that the target TCI state is known when said one or more reference signal resources corresponds to a reference signal resource associated with the target TCI state.

In some example embodiments, wherein the quality metric comprises one or more from the group of: reference signal received power, RSRP; L1 physical layer RSRP, L1-RSRP; signal to noise ratio, SNR, of a reference signal resource; any other quality metric associated with a reference signal resource.

In some example embodiments, the network apparatus further comprising means for switching to the target TCI state within the time period based on the determination the target TCI state is known.

In some example embodiments, the network apparatus, wherein the means for switching further comprising: means for performing the TCI state switch within the time period according to the known target TCI state, wherein the time period is calculated based on omitting an L1-RSRP measurement time period required for L1-RSRP measurement of the reference signal resources of the target TCI state; or means for performing the TCI state switch within the time period according to the known target TCI state, wherein the time period is calculated based on determining that at least one L1-RSRP measurement or measurement sample has been obtained in relation to the reference signal resources of the target TCI state.

In some example embodiments, wherein the measurement of the at least one measured reference signal resource of the first set of reference signal resources is an L1 physical layer measurement; and/or the L1 physical layer measurement is a reference signal resource received power, RSRP, measurement.

In some example embodiments, wherein, when the terminal apparatus is configured to perform prediction-based beam reporting, the means for determining whether the target TCI state is known or unknown, further comprising: means for determining that a reference signal resource of the first set of reference signal resources is associated with a corresponding predicted beam or reported predicted beam; and means for determining that the target TCI state is known when said reference signal resource of the first set of reference signals corresponds to a reference signal resource associated with the target TCI state.

In some example embodiments, the network apparatus comprises means for and/or is configured to determine, based on one or more conditions associated with at least one of: the at least predicted beam and the first set of reference signal resources, whether the target TCI state is known or unknown, and switch to the target TCI state based on the determination.

In some example embodiments, the network apparatus further comprising means for determining whether the target TCI state is known or unknown further comprising determining, based on one or more conditions associated with at least one of: the at least one predicted beam and the configured first set of reference signal resources, whether the target TCI state is known or unknown, and switching to the target TCI state within the time period based on a determination indicating the target TCI state is known.

In some example embodiments, the network apparatus, the terminal apparatus is configured to determine, based on one or more conditions associated with at least one of: the at least predicted beam and the measured first set of reference signal resources, whether the target TCI state is known or unknown, and switch to the target TCI state based on the determination.

In some example embodiments, the network apparatus further comprising means for determining whether the target TCI state is known or unknown further comprising determining, based on one or more conditions associated with at least one of: the at least one predicted beam and the measured first set of reference signal resources received from the terminal apparatus, whether the target TCI state is known or unknown, and switching to the target TCI state within the time period based on a determination indicating the target TCI state is known.

In some example embodiments, wherein the means for determining whether the target TCI state is known or unknown, further comprising: means for determining that one or more current model performance metrics corresponding to one or more of the predicted beams associated with one or more reference signal resources, respectively, are greater than or equal to a preconfigured or predefined model performance threshold level; in response to determining that at least one of the one or more current model performance metrics of said one or more of the reported predicted beams associated with one or more reference signal resources, respectively, is greater than or equal to the preconfigured or predefined model performance threshold level, determining that the target TCI state is known when said one or more reference signal resources corresponds to a reference signal resource associated with the target TCI state.

In some example embodiments, wherein the model performance metric comprises one or more from the group of: model prediction accuracy metrics; precision and recall metrics; area under the curve receiver operating curve, AUC-ROC, metrics; model confidence metric; probability score metric; any other model performance metric for evaluating the prediction performance of the model.

In some example embodiments, the network apparatus, wherein: the network apparatus comprises means for computing and/or is configured to compute at least one of the monitoring accuracy metric, model performance metric, model confidence metric, or probability score metric associated with the model and the at least one predicted beam for use in determining whether the target TCI state is known. For example, the network apparatus may be configured to determine whether the target TCI state is known, or likely to be known, to or by the terminal device.

In some example embodiments, the network apparatus, wherein: the network apparatus comprises means for computing and/or is configured to compute at least one of the monitoring accuracy metric, model performance metric, model confidence metric, or probability score metric associated with the model and the at least one predicted beam for use by the terminal apparatus in determining whether the target TCI state is known.

In some example embodiments, the network apparatus, wherein: the network apparatus is configured to use the computed monitoring accuracy metric, model performance metric, model confidence metric, or probability score metric associated with the model and the at least one predicted beam as the current monitoring accuracy metric, model performance metric, model confidence metric, or probability score metric when comparing with the respective monitoring accuracy threshold level, model performance threshold level, confidence threshold level, or probability score threshold level for determining the at least one predicted beam for the target TCI state and/or whether the target TCI state is known or unknown.

In some example embodiments, the network apparatus, further comprising: means for transmitting to the terminal apparatus a message for triggering the terminal apparatus to perform the prediction-based beam reporting or the prediction-based beam switching, wherein the measuring is performed at or after receiving the message.

In some example embodiments, the measurements of one or more reference signal resources corresponding to one or more previously predicted beams are performed by the terminal apparatus and reported to the network apparatus accordingly.

In some example embodiments, the network apparatus, wherein the network apparatus further comprises means for or is configured to: perform monitoring of the prediction accuracy, wherein the monitoring of prediction accuracy is based on the reported measurements of one or more reference signal resources corresponding to one or more previously predicted beams; and determine a prediction accuracy metric for at least one predicted beam based on said monitoring of the previously predicted beams and the indication of the corresponding at least one predicted beam; means for transmitting, to the terminal apparatus, data representative of the prediction accuracy metric for said at least one predicted beam for use by the terminal apparatus in determining whether the target TCI state is known or unknown based on comparing whether the prediction accuracy metric for the at least one predicted beam is greater than or equal to a prediction accuracy threshold level.

In some example embodiments, the network apparatus, wherein: the network apparatus is configured to set at least one of the monitoring accuracy threshold level, model performance threshold level, confidence threshold level, or probability score threshold level; or the network apparatus is configured to receive at least one of the monitoring accuracy threshold level, model performance threshold level, confidence threshold level, or probability score threshold level from the terminal apparatus.

In some example embodiments, the network apparatus, wherein: the network apparatus is configured to report at least one of the monitoring accuracy metric, model performance, model confidence metric, or probability score metric to the terminal apparatus.

In some example embodiments, the one or more conditions further comprising: the target TCI state is known if it is determined that at least one measured reference signal resource of the first set of reference signal resources corresponds to: a reference signal included in or associated with the target TCI state; or a reference signal received from a source in quasi co-location with the source of said reference signal included in or associated with the target TCI state; or a reference signal corresponding to the at least one reference signal included in or associated with the target TCI state that has a quality metric above a preconfigured or predefined quality threshold level.

In some example embodiments, the one or more conditions further comprising: the target TCI state is known if a predicted quality metric of a reference signal of the at least one predicted beam corresponding to a reference signal included in or associated with the target TCI state is greater than or equal to a preconfigured or predefined quality threshold level.

In some example embodiments, the one or more conditions further comprising: the target TCI state is known if a current model performance metric of the model inference operation corresponding to the at least one predicted beam with a reference signal included in or associated with the target TCI state is greater than or equal to a model performance threshold level.

In some example embodiments, the one or more conditions further comprising the target TCI state is known if a current model confidence or probability score metric of the model inference operation corresponding to the at least one predicted beam with a reference signal included in or associated with the target TCI state is greater than or equal to a respective confidence threshold level or probability score threshold level.

In some example embodiments, wherein: the network apparatus is configured to report at least one of the monitoring accuracy metric, model performance, model confidence metric, or probability score metric to the terminal apparatus; and the network apparatus is configured to use at least one of the reported monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level in relation to the one or more conditions.

In some example embodiments, wherein: the network apparatus is configured to receive from the terminal apparatus at least one of the monitoring accuracy metric, model performance metric, model confidence metric, or probability score metric; and the network apparatus is configured to use the currently received monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, wherein, prior to prediction-based beam switching, means for receiving, from the terminal apparatus, measurements of a second set of reference signal resources of the configured set of reference signal resources associated with the at least one predicted beam.

In some example embodiments, the means for receiving, from the terminal apparatus, the second set of the configured set of reference signal resources comprises receiving measurements of a reference signal associated with the at least one predicted beam or a reference signal associated with a beam which is received from a source in quasi co-location with the source of said reference signal associated with the at least one predicted beam.

In some example embodiments, wherein: based on the received measurements of at least one reference signal associated with the at least one predicted beam or reference signal associated with a beam which is received from a source in quasi-location with the source of said reference signal associated with the at least one predicted beam, performing prediction-based beam switching based on whether the target TCI state is known.

In some example embodiments, wherein: the measurements of the at least one measured reference signal is an L1 physical layer measurement; and, as an option, the L1 physical layer measurement is a reference signal received power, RSRP, measurement.

In some example embodiments, wherein the one or more conditions further comprising: the target TCI state is known if the indication or activation of the target TCI state is received by the terminal apparatus within a predefined time period after completing the terminal apparatus reports data representative the second group of beams comprising the at least one predicted beam to the network apparatus, and a reference signal associated with the at least one predicted beam corresponds to a reference signal associated with the target TCI state.

In some example embodiments, wherein: the predefined time period is less than the time period for performing the inference operation; or the predefined time period is less than the time period since the latest inference operation; or the predefined time period is greater than the time period used for non-prediction TCI switching.

In some example embodiments, wherein the one or more conditions further comprising: the target TCI state is known if the indication or activation of the target TCI state is received by the terminal apparatus within a number of X milliseconds, seconds, slots, radio frames or symbols after the terminal apparatus completes reporting data representative the second group of beams comprising the indication of the at least one predicted beam to the network entity.

In some example embodiments, wherein the one or more conditions further comprising: the target TCI state is known if the terminal apparatus has performed at least one measurement on a reference signal corresponding to a reference signal associated with the target TCI state or a reference signal received from a source in quasi co-location with the source of said reference signal associated with the target TCI state within a number of N milliseconds, seconds, slots, radio frames or symbols prior to receiving the indication that the target TCI state is indicated or activated.

In some example embodiments, the network apparatus of the sixth aspect, wherein the network apparatus comprises a network entity.

A seventh aspect provides a method comprising: transmitting, to a terminal apparatus, a configuration for measuring a first set of reference signal resources for respective beams of the network apparatus for use in determining at least one predicted beam, wherein the configured set of reference signal resources are associated with prediction-based beam reporting or prediction-based beam switching; and transmitting, to the terminal apparatus, an indication that a target transmission configuration indicator, TCI, state corresponding to the at least one predicted beam is to be activated or indicated; wherein the target TCI state, whether or not known or unknown, is determined, based on at least one of: the at least one predicted beam and the first set of reference signal resources, and switching to the target TCI state within a time period based on a determination indicating the target TCI state is known.

In some example embodiments, the method of the seventh aspect further comprising configuring the configured set of reference signal resources.

In some example embodiments, the method of the seventh aspect further comprising transmitting to the terminal apparatus a message for triggering the terminal apparatus to perform the prediction-based beam reporting or the prediction-based beam switching, wherein the measuring is performed at or after receiving the message.

In some example embodiments, the method of the seventh aspect further comprising receiving, from the terminal apparatus, an indication of at least one predicted beam generated by the terminal apparatus inputting measurements of the first set of reference signal resources to a model, wherein the model performs an inference operation for providing data representative of the indication of the at least one predicted beam.

In some example embodiments, the method of the seventh aspect further comprising receiving, from the terminal apparatus, measurements of the first set of reference signal resources for a first group of beams for determining at least one predicted beam from a second group of beams using a model, wherein the model performs an inference operation for providing data representative of an indication of the at least one predicted beam; and transmitting, to the terminal apparatus, the indication of the at least one predicted beam for use by the terminal apparatus in determining, based on one or more conditions associated with at least one of: the at least one predicted beam and the measured first set of reference signal resources and/or the configured first set of reference signal resources, whether the target TCI state is known or unknown, and switch to the target TCI state within the time period based on a determination indicating the target TCI state is known.

In some example embodiments, the method of the seventh aspect further comprising: inputting data representative of the measured first set of reference signal resources to the model; and reporting data representative of the indication of the at least one predicted beam to the terminal apparatus.

In some example embodiments, the method of the seventh aspect further comprising: receiving the measured first set of reference signal resources of the configured reference signal resources from the terminal apparatus for input to the model at the network apparatus.

In some example embodiments, the method of the seventh aspect further comprising determining, based on at least one of: the at least one predicted beam and the configured first set of reference signal resources, whether the target TCI state is known or unknown, and switching to the target TCI state within the time period based on a determination indicating the target TCI state is known.

In some example embodiments, the method of the seventh aspect further comprising determining, based on at least one of: the at least one predicted beam and the measured first set of reference signal resources received from the terminal apparatus, whether the target TCI state is known or unknown, and switching to the target TCI state within the time period based on a determination indicating the target TCI state is known.

In some example embodiments, the method of the seventh aspect, wherein said determining whether the target TCI state is known or unknown further comprising: determining that one or more predicted quality metrics of one or more reference signal resources associated with corresponding predicted beams are greater than or equal to a preconfigured or predefined quality threshold level; in response to determining that at least one of the one or more predicted quality metrics of said one or more reference signal resources associated with corresponding reported predicted beams is greater than or equal to the preconfigured or predefined quality threshold level, determining that the target TCI state is known when said one or more reference signal resources corresponds to a reference signal resource associated with the target TCI state.

In some example embodiments, the method of the seventh aspect, wherein the quality metric comprises one or more from the group of: reference signal received power, RSRP; L1 physical layer RSRP, L1-RSRP; signal to noise ratio, SNR, of a reference signal resource; any other quality metric associated with a reference signal resource.

In some example embodiments, the method of the seventh aspect further comprising switching to the target TCI state within the time period based on the determination the target TCI state is known.

In some example embodiments, the method of the seventh aspect, wherein said switching further comprising: performing the TCI state switch within the time period according to the known target TCI state, wherein the time period is calculated based on omitting an L1-RSRP measurement time period required for L1-RSRP measurement of the reference signal resources of the target TCI state; or performing the TCI state switch within the time period according to the known target TCI state, wherein the time period is calculated based on determining that at least one L1-RSRP measurement or measurement sample has been obtained in relation to the reference signal resources of the target TCI state.

In some example embodiments, the method of the seventh aspect, wherein the measurement of the at least one measured reference signal resource of the first set of reference signal resources is an L1 physical layer measurement; and/or the L1 physical layer measurement is a reference signal resource received power, RSRP, measurement.

In some example embodiments, the method of the seventh aspect, wherein, when the terminal apparatus is configured to perform prediction-based beam reporting, said determining whether the target TCI state is known or unknown, further comprising: determining that a reference signal resource of the first set of reference signal resources is associated with a corresponding predicted beam or reported predicted beam; and determining that the target TCI state is known when said reference signal resource of the first set of reference signals corresponds to a reference signal resource associated with the target TCI state.

In some example embodiments, the method of the seventh aspect further comprising determining, based on one or more conditions associated with at least one of: the at least predicted beam and the first set of reference signal resources, whether the target TCI state is known or unknown, and switching to the target TCI state based on the determination.

In some example embodiments, the method of the seventh aspect, wherein said determining whether the target TCI state is known or unknown further comprising determining, based on one or more conditions associated with at least one of: the at least one predicted beam and the configured first set of reference signal resources, whether the target TCI state is known or unknown, and switching to the target TCI state within the time period based on a determination indicating the target TCI state is known.

In some example embodiments, the method of the seventh aspect, wherein the terminal apparatus is configured to determine, based on one or more conditions associated with at least one of: the at least predicted beam and the measured first set of reference signal resources, whether the target TCI state is known or unknown, and switch to the target TCI state based on the determination.

In some example embodiments, the method of the seventh aspect, wherein said determining whether the target TCI state is known or unknown further comprising determining, based on one or more conditions associated with at least one of: the at least one predicted beam and the measured first set of reference signal resources received from the terminal apparatus, whether the target TCI state is known or unknown, and switching to the target TCI state within the time period based on a determination indicating the target TCI state is known.

In some example embodiments, the method of the seventh aspect, wherein said determining whether the target TCI state is known or unknown, further comprising: determining that one or more current model performance metrics corresponding to one or more of the predicted beams associated with one or more reference signal resources, respectively, are greater than or equal to a preconfigured or predefined model performance threshold level; in response to determining that at least one of the one or more current model performance metrics of said one or more of the reported predicted beams associated with one or more reference signal resources, respectively, is greater than or equal to the preconfigured or predefined model performance threshold level, determining that the target TCI state is known when said one or more reference signal resources corresponds to a reference signal resource associated with the target TCI state.

In some example embodiments, the method of the seventh aspect, wherein the model performance metric comprises one or more from the group of: model prediction accuracy metrics; precision and recall metrics; area under the curve receiver operating curve, AUC-ROC, metrics; model confidence metric; probability score metric; any other model performance metric for evaluating the prediction performance of the model.

In some example embodiments, the method of the seventh aspect, further comprising computing at least one of the monitoring accuracy metric, model performance metric, model confidence metric, or probability score metric associated with the model and the at least one predicted beam for use in determining whether the target TCI state is known. For example, the method of the seventh aspect may further comprise determining whether the target TCI state is known, or likely to be known, to or by the terminal device.

In some example embodiments, the method of the seventh aspect further comprising computing at least one of the monitoring accuracy metric, model performance metric, model confidence metric, or probability score metric associated with the model and the at least one predicted beam for use by the terminal apparatus in determining whether the target TCI state is known.

In some example embodiments, the method of the seventh aspect further comprising using the computed monitoring accuracy metric, model performance metric, model confidence metric, or probability score metric associated with the model and the at least one predicted beam as the current monitoring accuracy metric, model performance metric, model confidence metric, or probability score metric when comparing with the respective monitoring accuracy threshold level, model performance threshold level, confidence threshold level, or probability score threshold level for determining the at least one predicted beam for the target TCI state and/or whether the target TCI state is known or unknown.

In some example embodiments, the method of the seventh aspect further comprising transmitting to the terminal apparatus a message for triggering the terminal apparatus to perform the prediction-based beam reporting or the prediction-based beam switching, wherein the measuring is performed at or after receiving the message.

In some example embodiments, the method of the seventh aspect, wherein the measurements of one or more reference signal resources corresponding to one or more previously predicted beams are performed by the terminal apparatus and reported to the network apparatus accordingly.

In some example embodiments, the method of the seventh aspect further comprising performing monitoring of the prediction accuracy, wherein the monitoring of prediction accuracy is based on the reported measurements of one or more reference signal resources corresponding to one or more previously predicted beams; and determining a prediction accuracy metric for at least one predicted beam based on said monitoring of the previously predicted beams and the indication of the corresponding at least one predicted beam; transmitting, to the terminal apparatus, data representative of the prediction accuracy metric for said at least one predicted beam for use by the terminal apparatus in determining whether the target TCI state is known or unknown based on comparing whether the prediction accuracy metric for the at least one predicted beam is greater than or equal to a prediction accuracy threshold level.

In some example embodiments, the method of the seventh aspect further comprising setting at least one of the monitoring accuracy threshold level, model performance threshold level, confidence threshold level, or probability score threshold level; or receiving at least one of the monitoring accuracy threshold level, model performance threshold level, confidence threshold level, or probability score threshold level from the terminal apparatus.

In some example embodiments, the method of the seventh aspect further comprising reporting at least one of the monitoring accuracy metric, model performance, model confidence metric, or probability score metric to the terminal apparatus.

In some example embodiments, the method of the seventh aspect, wherein the one or more conditions further comprising: the target TCI state is known if it is determined that at least one measured reference signal resource of the first set of reference signal resources corresponds to: a reference signal included in or associated with the target TCI state; or a reference signal received from a source in quasi co-location with the source of said reference signal included in or associated with the target TCI state; or a reference signal corresponding to the at least one reference signal included in or associated with the target TCI state that has a quality metric above a preconfigured or predefined quality threshold level.

In some example embodiments, the method of the seventh aspect, wherein the one or more conditions further comprising: the target TCI state is known if a predicted quality metric of a reference signal of the at least one predicted beam corresponding to a reference signal included in or associated with the target TCI state is greater than or equal to a preconfigured or predefined quality threshold level.

In some example embodiments, the method of the seventh aspect, wherein the one or more conditions further comprising: the target TCI state is known if a current model performance metric of the model inference operation corresponding to the at least one predicted beam with a reference signal included in or associated with the target TCI state is greater than or equal to a model performance threshold level.

In some example embodiments, the method of the seventh aspect, wherein the one or more conditions further comprising the target TCI state is known if a current model confidence or probability score metric of the model inference operation corresponding to the at least one predicted beam with a reference signal included in or associated with the target TCI state is greater than or equal to a respective confidence threshold level or probability score threshold level.

In some example embodiments, the method of the seventh aspect further comprising reporting at least one of the monitoring accuracy metric, model performance, model confidence metric, or probability score metric to the terminal apparatus; and using, by the network apparatus, at least one of the reported monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level in relation to the one or more conditions.

In some example embodiments, the method of the seventh aspect further comprising receiving from the terminal apparatus at least one of the monitoring accuracy metric, model performance metric, model confidence metric, or probability score metric; and using, by the network apparatus, the currently received monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, confidence threshold level, or probability score threshold level.

In some example embodiments, the method of the seventh aspect, wherein, prior to prediction-based beam switching, the method further comprising receiving, from the terminal apparatus, measurements of a second set of reference signal resources of the configured set of reference signal resources associated with the at least one predicted beam.

In some example embodiments, the method of the seventh aspect, wherein said receiving, from the terminal apparatus, the second set of the configured set of reference signal resources further comprising receiving measurements of a reference signal associated with the at least one predicted beam or a reference signal associated with a beam which is received from a source in quasi co-location with the source of said reference signal associated with the at least one predicted beam.

In some example embodiments, the method of the seventh aspect, wherein: based on the received measurements of at least one reference signal associated with the at least one predicted beam or reference signal associated with a beam which is received from a source in quasi-location with the source of said reference signal associated with the at least one predicted beam, performing prediction-based beam switching based on whether the target TCI state is known.

In some example embodiments, the method of the seventh aspect, wherein: the measurements of the at least one measured reference signal is an L1 physical layer measurement; and, as an option, the L1 physical layer measurement is a reference signal received power, RSRP, measurement.

In some example embodiments, the method of the seventh aspect, wherein the one or more conditions further comprising: the target TCI state is known if the indication or activation of the target TCI state is received by the terminal apparatus within a predefined time period after completing the terminal apparatus reports data representative the second group of beams comprising the at least one predicted beam to the network apparatus, and a reference signal associated with the at least one predicted beam corresponds to a reference signal associated with the target TCI state.

In some example embodiments, the method of the seventh aspect, wherein: the predefined time period is less than the time period for performing the inference operation; or the predefined time period is less than the time period since the latest inference operation; or the predefined time period is greater than the time period used for non-prediction TCI switching.

In some example embodiments, the method of the seventh aspect, wherein the one or more conditions further comprising: the target TCI state is known if the indication or activation of the target TCI state is received by the terminal apparatus within a number of X milliseconds, seconds, slots, radio frames or symbols after the terminal apparatus completes reporting data representative the second group of beams comprising the indication of the at least one predicted beam to the network entity.

In some example embodiments, the method of the seventh aspect, wherein the one or more conditions further comprising: the target TCI state is known if the terminal apparatus has performed at least one measurement on a reference signal corresponding to a reference signal associated with the target TCI state or a reference signal received from a source in quasi co-location with the source of said reference signal associated with the target TCI state within a number of N milliseconds, seconds, slots, radio frames or symbols prior to receiving the indication that the target TCI state is indicated or activated.

In some example embodiments, the network apparatus of the seventh aspect, wherein the network apparatus comprises a network entity.

An eighth aspect of provides a computer program comprising a set of instructions which, when executed on an apparatus, is configured to cause the apparatus to carry out a method comprising: transmitting, to a terminal apparatus, a configuration for measuring a first set of reference signal resources for respective beams of the network apparatus for use in determining at least one predicted beam, wherein the configured set of reference signal resources are associated with prediction-based beam reporting or prediction-based beam switching; and transmitting, to the terminal apparatus, an indication that a target transmission configuration indicator, TCI, state corresponding to the at least one predicted beam is to be activated or indicated; wherein the target TCI state, whether or not known or unknown, is determined, based on at least one of: the at least one predicted beam and the first set of reference signal resources, and switching to the target TCI state within a time period based on a determination indicating the target TCI state is known.

In some example embodiments, the eighth aspect may include any other feature mentioned with respect to the method of the seventh aspect.

A ninth aspect of the invention provides a non-transitory computer-readable medium having stored thereon computer-readable code, which, when executed by at least one processor, causes the at least one processor to perform a method, comprising: transmitting, to a terminal apparatus, a configuration for measuring a first set of reference signal resources for respective beams of the network apparatus for use in determining at least one predicted beam, wherein the configured set of reference signal resources are associated with prediction-based beam reporting or prediction-based beam switching; and transmitting, to the terminal apparatus, an indication that a target transmission configuration indicator, TCI, state corresponding to the at least one predicted beam is to be activated or indicated; wherein the target TCI state, whether or not known or unknown, is determined, based on at least one of: the at least one predicted beam and the first set of reference signal resources, and switching to the target TCI state within a time period based on a determination indicating the target TCI state is known.

In some example embodiments, the ninth aspect may include any other feature mentioned with respect to the method of the seventh aspect.

A tenth aspect of the invention provides an apparatus, the apparatus having at least one processor and at least one memory having computer-readable code stored thereon which when executed controls the at least one processor to: transmitting, to a terminal apparatus, a configuration for measuring a first set of reference signal resources for respective beams of the network apparatus for use in determining at least one predicted beam, wherein the configured set of reference signal resources are associated with prediction-based beam reporting or prediction-based beam switching; and transmitting, to the terminal apparatus, an indication that a target transmission configuration indicator, TCI, state corresponding to the at least one predicted beam is to be activated or indicated; wherein the target TCI state, whether or not known or unknown, is determined, based on at least one of: the at least one predicted beam and the first set of reference signal resources, and switching to the target TCI state within a time period based on a determination indicating the target TCI state is known.

In some example embodiments, the tenth aspect may include any other feature mentioned with respect to the method of the seventh aspect.

An eleventh aspect of the invention provided computer-readable medium comprising instruction code stored thereon which, when executed by one or more processors, causes the one or more processors to perform the method of the second aspect.

A twelfth aspect of the invention provided computer-readable medium comprising instruction code stored thereon which, when executed by one or more processors, causes the one or more processors to perform the method of the seventh aspect.

## Brief Description of the Drawings

The invention will now be described, by way of non-limiting example, with reference to the accompanying drawings, in which:

FIG. 1 illustrates a network scenario comprising a network entity and a user terminal;
FIG. 2 is a flow diagram illustrating operations at the user terminal may be performed in accordance with one or more example embodiments;
FIG. 3 is a schematic diagram illustrating an example of how the FIG. 2 operations be performed in accordance with one or more example embodiments;
FIG. 4a is a signalling and processing diagram in accordance with one or more example embodiments in a case where beam prediction is performed at the user terminal;
FIG. 4b is a flow diagram illustrating operations performed at the network entity of FIG. 4a in accordance with one or more example embodiments;
FIG. 5a is a signalling and processing diagram in accordance with one or more example embodiments in a case where beam prediction is performed at the network entity;
FIG. 5b is a flow diagram illustrating operations performed at the network entity of FIG. 5a in accordance with one or more example embodiments;
FIG. 6a is a flow diagram illustrating operations performed at a user terminal in accordance with one or more other example embodiments;
FIG. 6b is a flow diagram illustrating operations performed at a user terminal in accordance with one or more other example embodiments;
FIG. 6c is a flow diagram illustrating operations performed at a user terminal in accordance with one or more other example embodiments;
FIG. 6d is a flow diagram illustrating operations performed at a network entity in accordance with one or more other example embodiments;
FIG. 7 illustrates an apparatus which may be configured in accordance with one or more example embodiments; and
FIG. 8 illustrates a non-transitory computer-readable medium which may be configured in accordance with one or more example embodiments.

## Detailed Description

Example embodiments relate to beam prediction and particularly to apparatuses and methods for determining a known or unknown status of an indicated target transmission configuration indicator, TCI, state corresponding to at least one predicted beam.

In relation to 5G NR, massive Multiple Input Multiple Output (MIMO) and beamforming technologies are used to provide enhanced throughput and capacity. Massive MIMO employs multi-antenna arrays and spatial multiplexing to transmit independent and separately encoded data signals or data streams. When employed at a network entity which may comprise part of a Radio Access Network (RAN), this may permit simultaneous communications with a plurality of user terminals over same time and frequency resources. Beamforming is used with massive MIMO technologies to provide directional beams for transmitting the data streams to respective user terminals with good connectivity and reduced interference. Beam management may refer to the process whereby a particular device, such as a network entity, determines which beam(s) to use for particular user terminal(s). Beam management may involve beamforming, beam selection and beam switching with the aim of maintaining good connectivity despite issues such as path loss and/or changes in user terminal position and/or orientation. Beam management is particularly, although not exclusively, applicable to Frequency Range 2 (FR2) communications for 5G NR.

According to 3GPP Release 17, beam management may employ the so-called unified TCI state framework, applicable to both downlink and uplink channels, whereby a beam to switch to, hereafter referred to as a target beam, can be indicated by the network entity to the user terminal with an indicated TCI state corresponding to the target beam. The channel may comprise at least one of a Physical Downlink Shared Channel (PDSCH), a Physical Downlink Control Channel (PDCCH), a Channel State Information Reference Signal (CSI-RS), a Physical Uplink Shared Channel (PUSCH), a Physical Uplink Control Channel (PUCCH) or a Sounding Reference Signal (SRS) channel. The network entity may, for example, indicate to the user terminal a target TCI state which may include an indication of at least one particular source reference signal (RS) associated with the target beam, which the user terminal may use for subsequent transmission and/or reception assumptions. The indicated target TCI state may also comprise quasi co-location (QCL) information for indicating one or more relationships between the particular RS and one or more other RSs which may, for example, indicate if the source (e.g., port) of the particular RS is in QCL with the source of the one or more other RSs. Two sources are said to be in QCL if properties of the channel over which a symbol on one source is conveyed can be inferred from the channel over which a symbol on the other source is conveyed. The quasi co-location relationship is configured by the higher layer parameter qcl-Type1 for the first DL RS, and qcl-Type2 for the second DL RS (if configured). For the case of two DL RSs, the QCL types may not be the same. The quasi co-location types corresponding to each DL RS are given by the higher layer parameter qcl-Type in QCL-Info and may take one of the following values:

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

The network entity may activate the target TCI state and the user terminal may switch to the indicated target TCI state after a TCI state switch delay period associated with the target TCI state, such that both the network entity and user terminal are synchronised in terms of when they switch to the target beam.

The TCI state switch delay period may be dependent on whether the target TCI state is "known" or "unknown" by the user terminal.

For example, according to 3GPP TS 38.133, the target TCI state may be known if (in one case) the user terminal has sent at least one Physical Layer (L1) Reference Signal Received Power (RSRP) report for a RS included in or associated with the target TCI state before the network node has indicated the target TCI state. If the target TCI state is unknown by the user terminal, the TCI state switch delay period may be longer than for the case where the target TCI state is known.

It has been proposed in 3GPP Release 19 to provide beam prediction of one or more target beams. Beam prediction may be performed using a model and may therefore employ methods associated with Artificial Intelligence (AI) or Machine Learning (ML). Beam prediction may enable faster and/or more accurate beam switching. For example, it is proposed to enable spatial-domain downlink beam prediction for a set A of beams based on measurements on a set B of beams. The set A of beams may be a set of beams associated with a configuration of a set of reference signal resources. The set B of beams may be associated with a first set of the configuration of the set of reference signal resources for measurement, where the first set of reference signal resources may be measured for input to the model. In some examples, the set B of beams (also referred to as a first set of RS resources associated with a first group of beams) may comprise a subset of the set A of beams (also referred to as a set of beams associated with a configured set of RS resources). The prediction may be performed using a model provided at the user terminal or at the network entity. The model may receive as input measurements associated with the set B of beams (or the first set of reference signals associated with corresponding beams), where the model performs an inference operation for outputting data representative of an indication of at least one predicted beam from the set A of beams. That is, at least one beam of the set A of beams may be predicted using the model based on receiving measurements associated with the set B of beams as input.

Therefore, upon receiving an indication of a target TCI state corresponding to at least one predicted beam from the set A of beams, it is possible that the user terminal may not have measured a RS associated with the at least one predicted beam (or a RS from a source in QCL with the source of the RS associated with the at least one predicted beam). The indicated target TCI state may therefore be unknown which may result in a longer TCI state switch delay period and therefore diminish advantages associated with beam prediction methods.

Example embodiments may avoid or alleviate such issues by ensuring or improving the likelihood that the indicated target TCI state will be known at the user terminal based on one or more conditions associated with the at least one predicted beam and/or the measured first set of reference signals and/or associated beams thereto (e.g., set B of beams). The user terminal and/or network entity may perform switching to the target TCI state based on the determination that the target TCI state is known from these one or more conditions. In some example embodiments, switching to the target TCI state is performed within a time period based on the determination indicating the target TCI state is known.

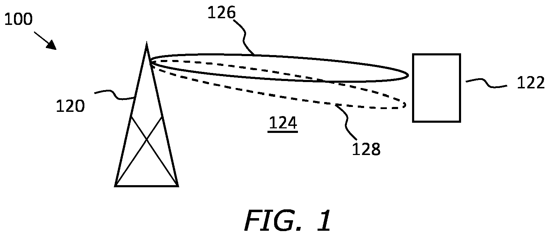

FIG. 1 illustrates a network scenario 100 comprising a network entity 120 and a user terminal 122.

Although one user terminal 122 is shown, in other example embodiments, there may be a plurality of user terminals which may be considered individually.

The network entity 120 may comprise a network node such as, but not limited to, a gNB (in the context of 5G/NR or future generation technologies) or a Transmission and Reception Point (TRP) or a relay node. The network entity 120 may be connected to one or more other network functions, not shown, which may comprise part of a core network or similar.

The user terminal 122 may comprise a terminal apparatus or user equipment (UE) such as, but not limited to, a mobile telephone, a tablet computer, a laptop computer, a personal computer, an Internet-of-Things (IoT) device, a digital assistant, or a wearable terminal such as a smartwatch.

The network entity 120 may be configured to transmit data over an air interface 124 to the user terminal 122 using one or more downlink channels.

The user terminal 122 may be configured to receive the data transmitted over the air interface 124 by the network entity 120 using the one or more downlink channels.

The network entity 120 may also be configured to receive data transmitted over the air interface 124 by the user terminal 122 using one or more uplink channels.

Examples of downlink and uplink channels are mentioned above.

The air interface 124 may comprise a cellular air interface associated with a Radio Access Technology (RAT) that both the network entity 120 and user terminal 122 are configured to support, for example 5G/NR or a future generation RAT.

The network entity 120 and the user terminal 122 may be configured such that the network entity transmits data for at least one of the above downlink channels using a directional beam. For example, the network entity 120 may process and transmit data via an antenna array using MIMO techniques. This may involve forming a first beam 126. The user terminal 122 may configure its receiver to receive data transmitted using the first beam 126.

At some later time, the network entity 120 may switch beams, e.g., from a current beam to a new or target beam 128.

This process is known as beam switching and may be required to deal with issues such as path loss experienced by the user terminal 122 and/or changes in position and/or orientation of the user terminal. For this purpose, a model may be used to predict at least one "predicted beam" that the network entity 120 and user terminal 122 can switch to.

The term model may mean a machine learning model or computational model or similar.

The model may comprise, but is not limited to, an artificial neural network (ANN). There are various known types of ANNs, including feed-forward neural networks, perceptron neural networks, convolutional neural networks, recurrent neural networks, deep neural networks, and so on. Each type may be more appropriate for a particular application or task. The model may be trained over one or more training iterations for predicting at least one predicted beam based on applying measurements associated with a first set of reference signal resources associated with one or more beams as input to the model. The one or more training iterations may involve supervised or unsupervised learning, or similar.

For example, for supervised learning, the training dataset may be a labelled training dataset comprising a plurality of labelled training data instances. Each training data instance includes measurement data associated with a particular set of beams from the set B of beams or associated reference signal resources, where the training data instance is annotated or labelled with data representative of one or more of the most appropriate beams from the set A of beams for switching to based on the measurement data of that training data instance. The supervised learning adjusts weights of the model based on the model, when performing its inference operation on the measurement data of one or more training data instances, providing an indication predicting one or more beams from set A of beams that correspond to the respective labelled or most appropriate beams from set A of beams for each training data instance accordingly.

For example, for unsupervised learning, the training iterations may be based on a set of measurement data for the set B of beams and/or associated reference signal resources (e.g., a first set) and a set of measurement data associated with beams of the set A of beams and/or associated reference signal resources, from which the unsupervised learning adjusts weights of the model based on the model, in its inference operation, providing an indication predicting the most appropriate beams from set A of beams when data representative of measurement data associated with the set B of beams (or first set) is input to the model accordingly.

It is to be understood that the particular training method and/or type of model is not the focus of example embodiments disclosed herein.

By predicting data representative of the at least one predicted beam, it is possible to avoid performing an exhaustive search of all possible beams that the network entity is capable of forming.

The model may be provided at the network entity 120 or at the user terminal 122.

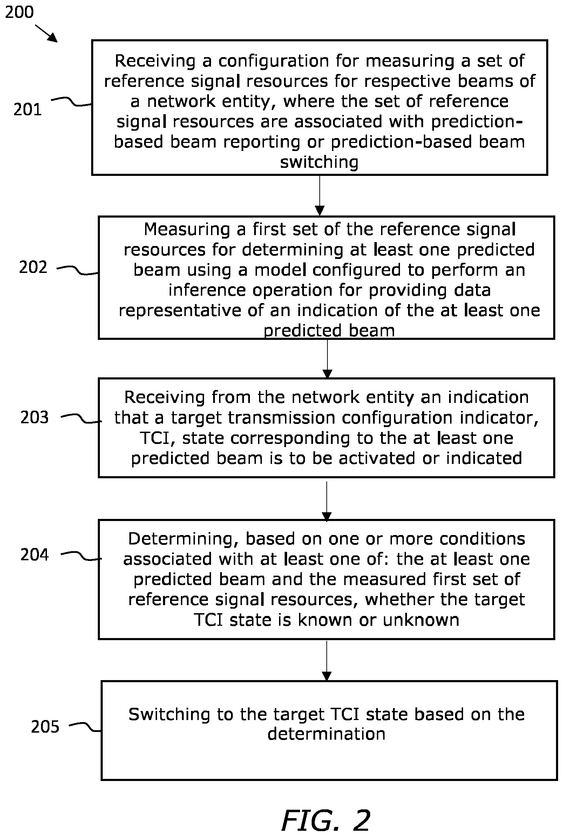

FIG. 2 is a flow diagram indicating operations 200 according to one or more example embodiments. The operations 200 may be performed in hardware, software, firmware, or a combination thereof. For example, the operations 200 may be performed individually, or collectively, by a means, wherein the means may comprise at least one processor and at least one memory storing instructions that, when executed by the at least one processor, cause the performance of the operations. For example, the operations 200 may be performed by a user terminal or apparatus, such as by the user terminal 122 of FIG. 1.

A first operation 201 may comprise receiving a configuration for measuring a set of reference signal resources for respective beams of a network entity, where the set of reference signal resources are associated with prediction-based beam reporting or prediction-based beam switching.

A second operation 202 may comprise measuring a first set of reference signal resources of the configured set of reference signal resources for a first group (e.g., set B) of beams for determining at least one predicted beam from a second group of beams (e.g., set A) using a model (e.g., a model as described with reference to FIG. 1), where the model performs an inference operation for providing data representative of an indication of the at least one predicted beam. The data representative of the indication of the at least one predicted beam output by the model may form a predicted set of beams or associated RS resources.

A third operation 203 may comprise receiving from the network entity an indication that a target transmission configuration indicator (TCI) state corresponding to the at least one predicted beam is to be activated or indicated.

A fourth operation 204 may comprise determining, based on one or more conditions associated with at least one of: the at least predicted beam of the predicted set and the measured first set of reference signal resources and/or respective beams, whether the target TCI state is known or unknown.

A fifth operation 205 may comprise switching to the target TCI state based on the determination.

In some example embodiments, the configured set of reference signal resources (hereafter RS resources) may comprise a set of one or more RSs associated with respective beams that the network entity can transmit.

In some example embodiments, the configuration may be received from the network entity.

In some example embodiments, the configuration may comprise resource sets which respectively indicate the set of RSs associated with the respective beams. In some example embodiments, the resource sets may indicate time and frequency resources such that the user terminal is able to perform measurements on the configured set of RS resources.

In some example embodiments, the configured set of RS resources may be associated with prediction-based beam reporting or prediction-based beam switching in the sense that measurements on the set of RS resources may be for the purpose of prediction-based beam reporting or prediction-based beam switching.

In some example embodiments, another operation may comprise receiving from the network entity a message for triggering prediction-based beam reporting or prediction-based beam switching, wherein the measuring of the configured set of RS resources is performed at or after receiving the message.

In some example embodiments, measuring the configured set of RS resources may comprise measuring at least one of the configured set of RS resources. In some example embodiments, measuring the configured set of RS resources may comprise performing at least one physical layer measurement, i.e., an L1 measurement, such as, but not limited to, an RSRP, measurement.

In some example embodiments, in operation 204, the one or more conditions are used to determine whether the target TCI state is known based on, without limitation, for example,

a) whether any RS resources included in or associated with the target TCI state corresponds to a Quasi-Colocation (QCL) source RS resources in relation to the first set;
b) whether any one or more RSs included in or associated with the target TCI state corresponds to one or more RSs of the first set and corresponding measured quality metrics for RS resources in first set; c) whether an RS resource included in or associated with the target TCI state corresponds to an RS resource of the at least one predicted beam of the predicted set of predicted beams and corresponding predicted quality metrics or measured quality metrics for the RS resource in the predicted set; d) whether an RS resource included in or associated with the target TCI state corresponds to an RS resource of the at least one predicted beam of the predicted set and corresponding monitoring metrics for the RS associated with the predicted set; and/or e) whether an RS resource included in or associated with the target TCI state corresponds to an RS resource of the at least one predicted beam of the predicted set and corresponding prediction or performance metrics such as, without limitation, for example model performance metrics, model performance accuracy metrics, model confidence or probability score metric and respective thresholds of the model inference operation for the RS in the predicted set.

In some example embodiments, in operation 205, the switching to the target TCI state based on the determination includes switching to the target TCI state within a time period based on a determination indicating the target TCI state is known. In some example embodiments, switching to the target TCI state within the time period based on the determination the target TCI state is known further includes one or more of: performing the TCI state switch within the time period according to the known target TCI state, wherein the time period is calculated based on omitting an L1-RSRP measurement time period required for L1-RSRP measurement of the reference signal resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

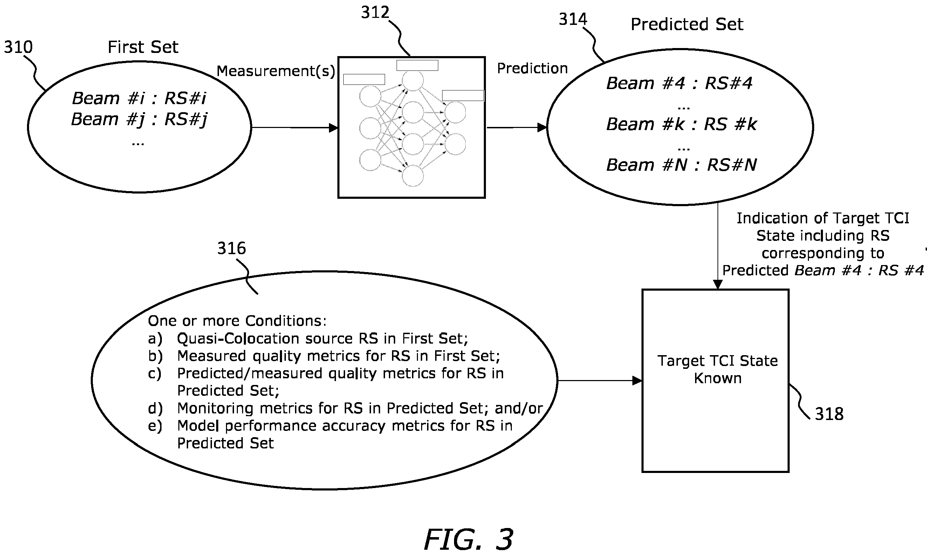

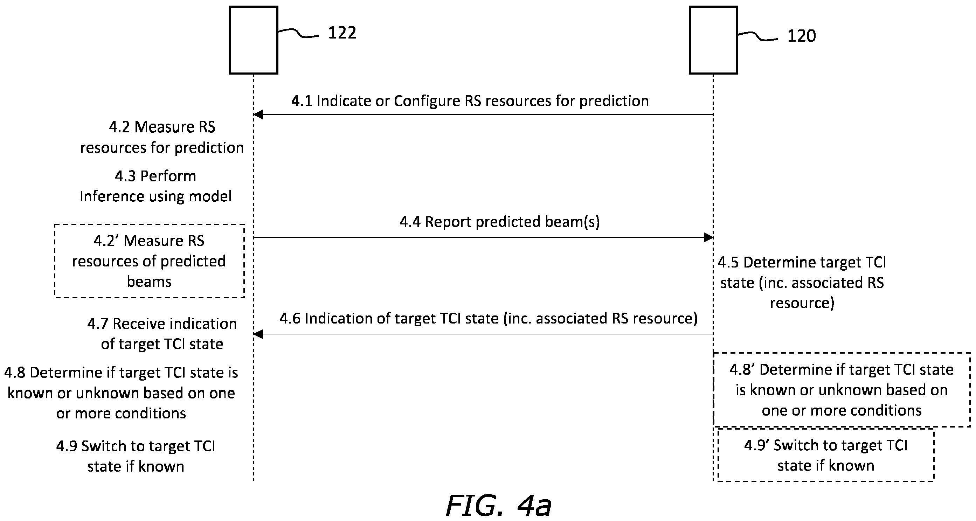

FIG. 3 illustrates one example of how the FIG. 2 operations and/or operations of FIG. 4a to FIG. 6d operations may be performed.

In accordance with the first operation 201, the user terminal 122 may receive a configuration for measuring a first set 310 of RS resources (e.g., RS#i, RS#j) for respective beams (e.g., Beam #i, Beam #j) of the network entity 120. The configuration may indicate a set of M RSs, *RS#1* to *RS#M,* associated with respective beams, *Beam #1 to Beam #M,* in which the first set 310 of RS resources are used for measurements by the user terminal 122. The first set 310 of the RS resources may comprise a sub-set of the set of M RSs. For example, the first set 310 of RS resources may comprise N RSs, *RS#1, ..., RS#i, RS#j, ...to RS#N,* associated with respective beams, *Beam #1 to Beam #N,* wherein N < *M.* As an example, a beam may be identified or associated with a reference signal.

The configuration may be received from the network entity 120.

The user terminal 122 may measure at least one of the first set 310 of RS resources based on the configuration.

In accordance with the second operation 302, the user terminal 122 may measure at least one of the first set 310 of RS resources at a particular time.

In some example embodiments, the user terminal 122 may be configured to measure the first set 310 of RS resources in response to receiving from the network entity 120 a message for triggering prediction-based beam reporting or prediction-based beam switching.

In some example embodiments, the message may indicate or separately configure the first set 310 of RS resources.

Measuring the first set 310 of RS resources may comprise performing channel and/or interference-related measurements, such as performing at least one physical layer (L1) measurement on the N RSs, e.g., at least one RSRP measurement. Such measurements are used in relation to prediction-based beam reporting or prediction-based beam switching.

The measuring of the first set 310 of RS resources may be performed over a first period.

The measuring of the first set 310 of RS resources may commence at, or after, receiving the above message for triggering prediction-based beam reporting or prediction-based beam switching.

The measurements (i.e., measurement results) on the first set 310 of RS resources may be applied, or input, to a model 312 (e.g., a model as described with reference to FIGs. 1 or 2).

In some example embodiments, the measurements of the first set 310 are not reported to the network entity 120 or not required (or configured not) to be reported to the network entity 120. For example, the RS resources may not be associated with a reporting configuration. For example, the RS resources be associated with a reporting configuration configuring that measurements on the RS are not reported.

The model 312 may be provided at the user terminal 122 or at the network entity 120. In the case that the model 312 is provided at the user terminal 122, the user terminal may apply or input the measurement results on the first set 310 of RS resources to the model 312.

In the case that the model 312 is provided at the network entity 120 and the user terminal 122 performs measurements on the first set 310, the user terminal 122 may report the measurement results to the network entity 120. The network entity 120 may apply or input the received measurement results to the model 312.

In alternative embodiments, if the model 312 is provided at the network entity 120 then the network entity 120 may be configured to perform the measurements of the first set 310 of RS resources, in which case the user terminal does not perform measurements of the first set 310 of RS resources.

The model 312 may be configured to perform an inference operation for providing an indication of at least one predicted beam 314 of a second set 314 of predicted RS resources (a Predicted Set). In the shown example, multiple prediction beams of the Predicted Set 314 (e.g., Beam #4 : RS #4, ..., Beam #k : RS #k, ..., Beam #N : RS #N) are predicted. Although multiple prediction beams are shown, this is by way of example only, the skilled person would appreciate that any number of predicted beams associated with the configuration may be predicted, for example, one beam, *Beam #4,* associated with a particular RS resource *RS#4* may only be predicted, or more than one beam, Beam #4,... Beam #k,... Beam #N, may be predicted as the application demands.

The inference operation of the model 312 may be configured to provide corresponding predicted metrics associated with the one or more predicted beams of the Predicted Set 314 including, without limitation, for example predicted quality (e.g., predicted RSRP or signal-to-noise ratio (SNR)) for each predicted beam, and/or predicted model performance (e.g., mean squared error, area under the curve, probability score/confidence score for the prediction (e.g. how confident the model is that predicted value is correct), etc.) associated with the predictions of one or more predicted beams and the like.

Instead of the user terminal 122 reporting the measurement results of the first set 310 of RSs, the second set 314 (or second group) of predicted RS resources (the Predicted Set 314) based on the first set 310 of RS resources may be associated with a reporting configuration. The user terminal 122 may be configured to report data representative of at least one predicted beam to the network entity 120. Such predicted RS resources are used in relation to prediction-based beam reporting or prediction-based beam switching. In some example embodiments, the reporting by the user terminal 122 may further include data representative of the predicted metrics output by the model 312.

The user terminal 122 may report the at least one predicted beam 314 to the network entity 120. In the shown example, the user terminal 122 may report data representative of the Predicted set 314 including at least one or more predicted beams, *Beam #4,... Beam #k,... Beam #N* and possibly the associated particular RS resource, *RS #4,... RS #k,... RS* #N, to the network entity 120. In some example embodiments, the reporting by the user terminal 122 may further include data representative of the predicted metrics output by the model 312.

In the case that the model 312 is provided at the network entity 120, the at least one predicted beam of the Predicted Set 314 is known by the network entity 120. The network entity 120 may explicitly or implicitly report to the user terminal 122 predicted metrics including, without limitation, for example the predicted quality for one or more predicted beams, and/or model performance metrics associated with the predictions of one or more predicted beams and the like.

Once the network entity 120 has the Predicted Set 314, the network entity 120 may generate a target TCI state corresponding to the at least one predicted beam of the Predicted Set 314 is to be activated or indicated. The network entity 120 may transmit an indication that the target TCI state corresponding to the at least one predicted beam 314 of the Predicted Set is to be activated or indicated. The target TCI state may indicate the particular RS resource associated with the at least one predicted beam of the Predicted Set 314. In the shown example, the target TCI state may indicate that *RS#4* is associated with *Beam #4.* A target TCI state may include one or more RS.

In some example embodiments, a predicted beam (or the RS corresponding to the predicted beam) of the Predicted Set 314 may correspond to the RS included in a TCI state or target TCI state.

In some example embodiments, a predicted beam (or the RS corresponding to the predicted beam) of the Predicted Set 314 may correspond to one of the RS included in a TCI state or target TCI state. In an example if multiple RS are included in the TCI state (or target TCI state) the RS associated with the predicted beam (or predicted RS of a predicted beam) may correspond to the RS providing QCL-typeD information in the TCI state.

In accordance with the third operation 203, the user terminal 122 may receive from the network entity 120 the indication that the TCI state (or target TCI state) corresponding to the at least one predicted beam is to be activated or indicated. In the case that the model 312 is provided at the network entity 120, the network entity 120 may further provide the user terminal 122 with data representative of the one or more predicted beams of the Predicted Set 314, and/or corresponding prediction metrics associated with predicted quality (e.g., predicted RSRP or signal-to-noise ratio (SNR)) and/or model performance (e.g., mean squared error, or other model performance metrics) and the like.

In accordance with the fourth operation 204, the user terminal 122 may determine, based on at least one of the measured first set 310 of RS resources, the Predicted Set 314 of the predicted beams of the RS resources, and/or prediction metrics associated with the at least one predicted beam of the Predicted Set 314, whether the indicated target TCI state is known or unknown. This operation is indicated by reference numeral 318.

In the determination of whether the indicated target TCI state is known or unknown, the user terminal 122 takes into account various one or more conditions 316 associated with at least the measured first set 310 of RS resources, the Predicted Set 314 of the predicted beams of the RS resources, and/or prediction metrics associated with the at least one predicted beam of the Predicted Set 314.

These one or more conditions 316 are used to determine whether the target TCI state is known based on, without limitation, for example, a) whether any RS resources included in or associated with the target TCI state corresponds to a Quasi-Colocation source RS resources in relation to the first set 310; b) whether any one or more RSs included in or associated with the target TCI state corresponds to one or more RSs of the first set 310 and corresponding measured quality metrics for RS resources in first set 310; c) whether an RS resource included in or associated with the target TCI state corresponds to an RS resource of the at least one predicted beam of the Predicted Set 314 and corresponding predicted quality metrics or measured quality metrics for the RS resource in the Predicted Set 314; d) whether an RS resource included in or associated with the target TCI state corresponds to an RS resource of the at least one predicted beam of the Predicted Set 314 and corresponding monitoring metrics for the RS in the Predicted Set; and/or e) whether an RS resource included in or associated with the target TCI state corresponds to an RS resource of the at least one predicted beam of the Predicted Set 314 and corresponding prediction metrics or performance metrics such as, without limitation, for example model performance metrics, model performance accuracy metrics, model confidence or probability score metric for the RS in the Predicted Set, where the prediction metrics or performance metrics may be compared with respective thresholds.

Although the user terminal 122 is described with reference to FIG. 3 as being configured to use or apply the above one or more conditions 316, where the one or more conditions 316 may include or are associated with one or more of the following conditions described below for determining whether the target TCI state is known or unknown, this is by way of example only and the invention is not so limited, it is to be appreciated by the skilled person in the art that other devices such as, without limitation, for example the network entity 120 may also be configured or adapted to use or apply the above one or more conditions 316 and/or the following one or more conditions for use in determining whether the target TCI state is known or unknown, or whether the target TCI state is known or unknown to the user terminal 122 prior to switching and the like as the application demands.

For example, alternatively or in addition to the above conditions 316 the user terminal 122 may be configured to use the following one or more conditions to determine that the indicated target TCI state is known if at least one RS resource of the measured first set 310 of RS resources corresponds to:

(i) an RS resource included or associated with the target TCI state; or
(ii) an RS resource associated with the at least one predicted beam of the Predicted Set 314, or
(iii) an RS received from a source (e.g., port) that is in QCL with the source of the RS resource associated with the at least one predicted beam; or
(iv) a RS received from a source in quasi co-location with the source of said RS included in or associated with the target TCI state.

The user terminal 122 may therefore determine that the indicated target TCI state is known. Otherwise, it may be determined the target TCI state is unknown.

In some example embodiments, alternatively or in addition to the above condition(s) 316, the user terminal 122 may be configured to use the following condition to determine that the indicated target TCI state is known if a measured quality metric of a RS resource of the first set 310 corresponding to a RS resource included in or associated with the target TCI state is greater than or equal to a preconfigured or predefined measured quality threshold level. Otherwise, it may be determined the target TCI state is unknown. In some example embodiments, the measured quality metric may include, without limitation, for example one or more from the group of: RS received power (RSRP); L1 physical layer RSRP (L1-RSRP); signal to noise ratio (SNR) of a RS resource; any other quality metric associated with a RS resource that is capable of being measured.

In some example embodiments, alternatively or in addition to the above condition(s) 316, the user terminal 122 may be configured to use the following condition to determine that the indicated target TCI state is known if a predicted quality metric of a RS resource of a predicted beam corresponding to a RS resource included in or associated with the target TCI state is greater than or equal to a preconfigured or predefined quality threshold level. Otherwise, it may be determined the target TCI state is unknown. In some example embodiments, the predicted quality metric may include, without limitation, for example one or more from the group of: a predicted RSRP; predicted L1-RSRP; predicted SNR of a RS resource; any other quality metric associated with a RS resource capable of being predicted in relation to the at least one predicted beam of the Predicted Set 314.

For example, determining whether the target TCI state is known or unknown, may further include determining that the one or more predicted quality metrics of one or more RS resources associated with corresponding reported predicted beams of the Predicted Set 314 are greater than or equal to a preconfigured or predefined quality threshold level. In response to determining that at least one of the one or more predicted quality metrics of said one or more RS resources associated with corresponding reported predicted beams is greater than or equal to the preconfigured or predefined quality threshold level, determining that the target TCI state is known when said one or more RS resources corresponds to a RS resource included in or associated with the target TCI state. Otherwise, it may be determined the target TCI state is unknown.

In some example embodiments, alternatively or in addition to the above condition(s) 316, the user terminal 122 may be configured to use the following condition to determine that the target TCI state is known if a prediction accuracy metric for the at least one predicted beam is greater than or equal to a prediction accuracy threshold level. Otherwise, it may be determined the target TCI state is unknown. For example, the user terminal 122 may be configured to derive the prediction accuracy metric from performing monitoring of the prediction accuracy of the model 312 in relation to the at least one predicted beam. For example, the monitoring of prediction accuracy may be based on the measurements of one or more RS resources corresponding to one or more previously predicted beams output by the model 312. The prediction accuracy metric for at least one predicted beam may be based on said monitoring of the previously predicted beams and the indication of the corresponding at least one predicted beam of the Predicted Set 314.

In another example embodiment, alternatively or in addition to the above condition(s) 316, the user terminal 122 may be configured to monitor one or more RS resources corresponding to one or more previously predicted beams. The user terminal 122 may be configured to determine a monitoring accuracy metric between (previously) predicted beam of a RS resource and a corresponding current predicted beam of the RS resource. The user terminal 122 may use the following condition to determine the target TCI state is known if the monitoring accuracy metric for a current predicted beam with a RS resource included in or associated with the target TCI state is greater than or equal to a monitoring accuracy threshold level. Otherwise, it may be determined the target TCI state is unknown.

In some embodiments, the user terminal 122 is configured to perform monitoring of the prediction accuracy, where the monitoring of prediction accuracy is based on the measurements of one or more RS resources corresponding to one or more previously predicted beams. The user terminal 122 is configured to determine a prediction accuracy metric for at least one predicted beam based on said monitoring of the previously predicted beams and the indication of the corresponding at least one predicted beam. Alternatively, or in addition to the above condition(s) 316, the user terminal 122 may configured to use the following condition to determine the target TCI state is known if the prediction accuracy metric for the at least one predicted beam is greater than or equal to a prediction accuracy threshold level. Otherwise, it may be determined the target TCI state is unknown.

In some embodiments, alternatively or in addition to the above condition(s) 316, the user terminal 122 may use the following condition to determine the target TCI state is known if a current model performance metric of the model inference operation corresponding to the at least one predicted beam with a RS resource included in or associated with the target TCI state is greater than or equal to a model performance threshold level. Otherwise, it may be determined the target TCI state is unknown. For example, the model performance metric includes, without limitation, for example one or more from the group of: model prediction accuracy metrics; precision and recall metrics; area under the curve receiver operating curve (AUC-ROC) metrics; confidence metric or probability score metrics; and any other model performance metric (or ML performance statistic/metric or measure) for evaluating the performance of the model 312.

In one example, the confidence metric or the probability score metric may be a confidence or probability value/score may indicate how confident the model 312 is for the predicted value or property to be accurate. Probability or confidence may be expressed e.g., as percentage values or decimal values (e.g., in a range between [0..1]) and/or based on any other suitable value and the like.

In some embodiments, alternatively or in addition to the above condition(s) 316, the user terminal 122 may use the following condition to determine the target TCI state is known if a current model confidence or probability score metric of the model inference operation corresponding to the at least one predicted beam with a RS included in or associated with the target TCI state is greater than or equal to a respective confidence threshold level or probability score threshold level. Otherwise, it may be determined the target TCI state is unknown.

In some embodiments, alternatively or in addition to the above condition(s) 316, the user terminal 122 may use the following condition to determine the target TCI state is known if the indication or activation of the target TCI state is received within a predefined time period after completing reporting data representative of the second set or Predicted Set 314 of beams including the at least one predicted beam to the network entity 120, and a RS associated with the at least one predicted beam corresponds to a RS included in or associated with the target TCI state. Otherwise, it may be determined the target TCI state is unknown. For example, the predefined time period is less than the time period for performing the inference operation. In another example, the predefined time period is less than the time period since the latest inference operation. In another example, the predefined time period is greater than the time period used for non-prediction TCI switching.

In some embodiments, alternatively or in addition to the above condition(s) 316, the user terminal 122 may use the following condition to determine the target TCI state is known if the indication or activation of the target TCI state is received within a number of $X$ milliseconds, seconds, slots, radio frames or symbols after the user terminal 122 completes reporting data representative the Predicted Set 314 (e.g., second set (or group)) of beams comprising data representative of the indication of the at least one predicted beam to the network entity 120. Otherwise, it may be determined the target TCI state is unknown.

In some embodiments, alternatively or in addition to the above condition(s) 316, the user terminal 122 may be configured to use the following condition to determine the target TCI state is known if the user terminal 122 has performed at least one measurement on a RS corresponding to a RS included in or associated with the target TCI state or a RS received from a source in quasi co-location with the source of said RS included in or associated with the target TCI state within a number of $N$ milliseconds, seconds, slots, radio frames or symbols prior to receiving the indication that the target TCI state is indicated or activated.

In some embodiments, the user terminal 122 may be configured to set at least one of the monitoring accuracy threshold level, model performance threshold level, confidence threshold level, or probability score threshold level. In other embodiments, the network entity 120 may be configured to instruct the user terminal 122 to set at least one of the monitoring accuracy threshold level, model performance threshold level, confidence threshold level, or probability score threshold level. For example, the user terminal 122 may receive the monitoring accuracy threshold level, model performance threshold level, confidence threshold level, or probability score threshold level from the network entity 120.

In some embodiments, the user terminal 122 may be configured to report at least one of the monitoring accuracy metric, model performance metric, confidence threshold level, or probability score threshold level to the network entity 120. The user terminal 122 and/or network entity 120 are configured to use at least one of the currently reported monitoring accuracy metric, model performance metric, confidence threshold level, or probability score threshold level as the current monitoring accuracy metric, model performance metric, current model confidence metric, or probability score metric for comparing with the respective monitoring accuracy threshold level, model performance threshold level, confidence threshold level, or probability score threshold level, respectively.

In other embodiments, the user terminal 122 may be configured to receive from the network entity 120 at least one of the monitoring accuracy metric, model performance metric, model confidence metric, or probability score metric. The user terminal 122 is configured to use at least one of the currently received monitoring accuracy metric, model performance metric, model confidence metric, or probability score metric as the current monitoring accuracy metric, model performance metric, model confidence metric, or probability score metric for comparing with the respective monitoring accuracy threshold level, model performance threshold level, model confidence threshold level, or probability score threshold level. In another example, the network entity 120 is configured to use the received monitoring accuracy metric, model performance metric, model confidence metric, or probability score metric as the current monitoring accuracy metric, model performance metric, model confidence metric, or probability score metric for comparing with the monitoring accuracy threshold level, model performance threshold level, model confidence threshold level, or probability score threshold level.

In some embodiments, the target TCI state is considered known if the indication or activation of the target TCI state of operation 203 is received within a number of *X* milliseconds, seconds, slots, radio frames or symbols after the user terminal 122 completes reporting data representative the Predicted Set 314 of beams including the indication of the at least one predicted beam to the network entity. In some embodiments, for prediction-based TCI State switching, the target TCI State is considered to be known if the beam switch command/configuration of operation 203 from the network entity 120 is received with a time period of *X* time units after the user terminal 122 has reported the one or more predicted beams of the Predicted Set 314. The time units may be any suitable unit of time including, without limitation, for example, milliseconds, slots, seconds and the like.

In some embodiments, prior to prediction-based beam switching in operation 205, the user terminal 122 may be further configured to measure one or more RS of a second set of the configured set of RS resources associated with the at least one predicted beam of the Prediction Set 314. For example, measuring the one or more RS of the second set of the configured set of RS resources includes measuring a RS associated with the at least one predicted beam or a RS associated with a beam which is received from a source in QCL with the source of said RS associated with the at least one predicted beam of the Predicted Set 314. As an option, after or based on measuring at least one RS associated with the at least one predicted beam or RS associated with a beam which is received from a source in QCL with the source of said RS associated with the at least one predicted beam of the Predicted Set 314, performing prediction-based beam switching based on whether the target TCI state is known.

In some example embodiments, the user terminal 122 may be is configured to perform prediction-based beam reporting or prior to prediction-based beam switching, where the user terminal 122 is configured to: trigger measuring, after reporting data representative of an indication of the one or more predicted beams of the Predicted Set 314, of at least one of the RS resources associated with at least one of the predicted beams, where said measuring of the at least one of the RS resource associated with the at least one of the predicted beams is performed based on one or more from the group of: measuring a RS resource associated with at least one predicted beam in a first slot of the particular RS resource occurring after reporting the predicted beam associated with the RS resource; or measuring a RS resource associated with at least one predicted beam within a predetermined or specified time period after reporting the predicted beam associated with the RS resource. In another embodiment, after measuring the RS associated with the at least one predicted beam, performing prediction-based beam switching based on whether the target TCI state is known.

For example, the user terminal 122 may determine that the target TCI state is a known TCI state if the user terminal 122 has performed at least one measurement on the RS of at least one RS in target TCI state or QCLed to the at least one RS in the target TCI state. In another example, the user terminal 122 may determine that the target TCI state is a known TCI state if the user terminal 122 has performed at least one measurement on the RS of at least one RS in target TCI state or QCLed to the at least one RS in the target TCI state within a predefined or predetermined time period prior to the TCI state switch indication has been received by the user terminal 122 or prior to when the user terminal 122 is to perform the TCI state switch.

The measurement of the at least one measured RS may be, for example, an L1 physical layer measurement. For example, the L1 physical layer measurement may be a RSRP measurement.

In some example embodiments, in addition to the above condition(s), the user terminal 122 may determine that the indicated target TCI state is known if at least one measurement of the particular RS resource is an L1 physical layer measurement, for example a RSRP measurement.

In some embodiments, the target TCI state is known if the indication or activation of the target TCI state is received within a number of X milliseconds, seconds, slots, radio frames or symbols after the user terminal 122 completes reporting data representative the Predicted Set 314 including the at least one predicted beam to the network entity 120.

In another embodiment, in addition to the one or more conditions 316, the user terminal 122 may determine the target TCI state is known if the user terminal 122 has performed at least one measurement on a RS corresponding to a RS included in or associated with the target TCI state or a RS received from a source in QCL with the source of said RS included in or associated with the target TCI state within a number of N milliseconds, seconds, slots, radio frames or symbols prior to operation 203 of receiving the indication or activation of the target TCI state.

In accordance with the fifth operation 205, the user terminal 122 may switch to the target TCI state (e.g., within or after a time period of a known TCI state switch delay) if the indicated target TCI is known.

In some example embodiments, the switching to the target TCI state may be performed within (or after) a time period based on a determination indicating the target TCI state is known. For example, the time period may be based on a known TCI state switching delay associated with the target TCI state when the target TCI state is known. In an example, switching to the target TCI state within the time period based on the determination the target TCI state is known may further include one or more of: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

In some example embodiments, the switching to the target TCI state may be performed within (or after) the time period of known TCI state switching delay associated with the target TCI state, e.g., based on the time period as set out in 3GPP TS 38.133. For example, the time period that is calculated may be derived from, based on, or include the downlink TCI state switch delay specified in 8.15.3 *"MAC-CE based downlink TCI state switch delay"*, where when the target TCI state is known, the user terminal 122 may delay the TCI state switch until the first slot that is after a delay period of: *slot n+* $T_{HARQ}$ *+ + TO*$_{uk}$*( Tfirst-*$_{SSB}$*+ T*$_{SSB-proc}$*) / NR slot length.*

In some embodiments, the user terminal 122 may perform a determination of whether the target TCI state is unknown or known as described in the above-mentioned embodiments, however, in response to determining the target TCI state to be unknown, the user terminal 122 may modify the prediction beam switch switching delay based on one or more of the following: when the prediction beam switch switching delay is calculated using a parameter value related to the L1 RSRP measurement time (e.g., $T_{L1-RSRP}$), then setting this parameter value to 0 (e.g., $T_{L1-RSRP}=0$); when the prediction beam switch switching delay is calculated using a parameter value related to $TO_{uk}$, then set the $TO_{uk}$ to 1 for channel state information reference signal (CSI-RS) based L1-RSRP measurement; when the prediction beam switch switching delay is calculated using a parameter value related to $TO_{uk}$, then set the $TO_{uk}$ to 0 for Synchronization Signal Block (SSB) or Synchronization Signal Physical Broadcast Channel Block (SS/PBCH) based L1-RSRP measurement when TCI state switching involves QCL-TypeD.

For example, according to 3GPP 38.133 8.15.3 "MAC-CE based downlink TCI state switch delay*",* when the target TCI state is unknown, the user terminal 122 may delay the TCI state switch until the first slot that is after a delay period of: slot $n+ T_{HARQ} + 3N_{slot}^{subframe,\mu} +$ $(T_{L1-RSRP} + TO_{uk}*(T_{first-SSB} + TSSB_{-proc}))$ / *NR slot length.* The prediction beam switch switching delay may be based on this delay period, where when the target TCI state is unknown in prediction-based beam switching, then the L1 RSRP measurement time (e.g., $T_{L1-RSRP}$) can be set to zero (e.g., $T_{L1-RSRP}=0$). In this example, the prediction beam switching delay may be the first slot that is after a delay period of: slot $n+ T_{HARQ} + 3N_{slot}^{subframe,\mu} + (TO_{uk}*(T_{first-SSB} + Ts_{SB-proc}))$ / *NR slot length.* In another example, the prediction beam switch switching delay may be based on the above delay period, where when the target TCI state is unknown in prediction-based beam switching, then the parameter $TO_{uk}$ is set to 1 for CSI-RS based L1-RSRP measurement. The prediction beam switching delay may be the first slot that is after a delay period of: slot $n+ T_{HARQ} + 3N_{slot}^{subframe,\mu} + (T_{L1-RSRP} + (T_{first-SSB} + T_{SSB-proc}))$ / *NR slot length.* In another example, the prediction beam switch switching delay may be based on the above delay period, where when the target TCI state is unknown in prediction-based beam switching, then the parameter value related to $TO_{uk}$ is set to 0 for SSB based L1-RSRP measurement when TCI state switching involves QCL-TypeD. The prediction beam switching delay may be the first slot that is after a delay period of: slot $n+ T_{HARQ} + 3N_{slot}^{subframe,\mu} + T_{L1-RSRP}$ */ NR slot length*.

The network entity 120 may be configured to switch to the target TCI state at the same time so that both the user terminal 122 and the network entity 120 are synchronised.

It follows that by measuring the first set 310 of reference signal resources, predicting the quality metrics and/or model performance metrics of the predicted beams in the Predicted Set 314, determining a monitoring accuracy metric associated with previous and current predicted beams of the Predicted Set 314, and/or measuring the reference signal resources of the predicted beams in the Predicted Set 314, then there is an increased likelihood that the user terminal 122 will robustly and accurately determine that the indicated target TCI state is known in the case of prediction-based beam reporting or prediction-based beam switching.

Although the above-mentioned one or more conditions 316 are described as used or applied by the user terminal 122 to determine whether the target TCI state is known, this is by way of example only and the invention is not so limited, it is to be appreciated by the skilled person that the above one or more conditions 316 and the other conditions described herein may be used by either the user terminal 122, the network entity 120, and/or both for determining the target TCI state, whether or not known or unknown, based on the one or more conditions 316 associated with at least one of: the at least one predicted beam and the first set 310 of reference signal resources. For example, the network entity 120 may implement the model 312, where the user terminal 122 reports measurements of the first set 310 of RS resources, such that the network entity 120 generates the Predicted Set 314 of at least one predicted beam and may use the one or more conditions to determine whether the target TCI state associated with the predicted beam is known or unknown. The network entity 120 may receive measurements of the first set 310 of RS resources, and compute or predict the quality metrics and/or model performance metrics of the predicted beams in the Predicted Set 314 using the model 312 and/or other models accordingly. The network entity 122 may also determine the monitoring accuracy metric associated with previous and current predicted beams of the Predicted Set 314 when implementing model 312, and/or receive further measurements of the RS resources of the predicted beams in the Predicted Set 314. Thus, the network entity 120 may be configured to determine, based on the one or more conditions 316, associated with at least one of: the at least predicted beam, the configuration of the first set 310 of RS resources and/or measured first set 310 of RS resources, whether the target TCI state is known or unknown, and switch to the target TCI state based on the determination.

In another example, either the user terminal 122, the network entity 120, and/or both may be configured to determine, based on the one or more conditions 316 associated with at least one of: the at least predicted beam, the configuration of the first set 310 of RS resources and/or measured first set 310 of RS resources, whether the target TCI state is known or unknown, and switch to the target TCI state based on the determination. In another example, as described above, the user terminal 122 may be configured to determine, based on the one or more conditions 316 associated with at least one of: the at least predicted beam of the Predicted Set 314 and the measured first set 310 of RS resources, whether the target TCI state is known, and switch to the target TCI state when it is known accordingly. At the same time, the network entity 120 may be configured to determine, based on the one or more conditions 316 associated with at least one of: the at least predicted beam of the Predicted Set 314, the configuration of the first set 310 of RS resources, and/or the measured first set 310 of RS resources (e.g., if reported to the network entity 120 by the user terminal 122), whether the target TCI state is known, and switch to the target TCI state when it is determined to be known accordingly.

In another example, the network entity 120 may be configured to determine, based on the one or more conditions 316 associated with at least one of: the at least predicted beam and the configuration of the first set 310 of RS resources and/or measured first set 310 of RS resources (e.g., if reported to the network entity 120 by the user terminal 122), whether the target TCI state is expected to be known or unknown by the user terminal 122, and, if known, the network entity 120 may switch to the target TCI state based on the determination.

Furthermore, in some embodiments, the user terminal 122, the network entity 120, and/or both may be configured to, where the target TCI state is whether or not known or unknown, determine, based on at least one of: the at least one predicted beam, configuration of the first set 310 of RS resources and/or measured first set 310 of RS resources (e.g., if reported to the network entity 120 by the user terminal 122), whether the target TCI is known. The user terminal 122, the network entity 120, and/or both may be configured to switch to the target TCI state within a time period based on a determination indicating the target TCI state is known.

The switching to the target TCI state may be performed by both the user terminal 122 and/or the network entity 120 within (or after) a time period based on a determination indicating the target TCI state is known. For example, the time period may be based on a known TCI state switching delay associated with the target TCI state when the target TCI state is known. In an example, switching to the target TCI state within the time period based on the determination the target TCI state is known may further include one or more of: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

It follows that by measuring the first set 310 of RS resources, predicting the quality metrics and/or model performance metrics of the predicted beams in the Predicted Set 314, determining a monitoring accuracy metric associated with previous and current predicted beams of the Predicted Set 314, and/or measuring the RS resources of the predicted beams in the Predicted Set 314, then there is an increased likelihood that the user terminal 122 and/or the network entity 120 can use the one or more conditions 316 to robustly and accurately determine that the indicated target TCI state is known in the case of prediction-based beam reporting or prediction-based beam switching and may synchronise switching to the target TCI state, where the user terminal 122 and/or network entity 120 receive appropriate reporting messages from each other depending on where the model 312 is implemented (e.g., reporting messages associated with, without limitation, for example measurements of the first set 310, predictions of the Predicted Set 314, monitoring accuracy metrics, prediction accuracy metrics, model performance metrics, quality metrics and the like).

FIG. 4a illustrates a signalling and processing diagram according to some example embodiments, for the case that the user terminal 122 performs the inference operation using the model 312.

A first operation 4.1 may comprise the network entity 120 configuring the user terminal 122 with set of RS resources for performing measurements in relation to a first set 310 of RS resources and/or predicting beams from the set of RS resources to form a Predicted Set 314. The Predicted set 314 may include beams associated with the first set 310 of RS resources and/or from the set of RS resources. This may further include the network entity 120 indicating (or separately configuring) to the user terminal 122 the first set 310 of RS resources that will be measured for use in prediction-based beam switching or prediction-based beam reporting.

A second operation 4.2 may comprise the user terminal 122 commencing measurement of the first set 310 of RS resources for use in predicting at least one beam and associated RS resource from the set of RS resources to form a Predicted Set 314. The Predicted Set 314 includes one or more predicted beams and associated RS resources as described with reference to FIG. 3.

A third operation 4.3 may include the user terminal 122 performing an inference operation using the measurement results of the third operation 4.3. The inference operation using a model configured for predicting at least one predicted beam and/or associated RS resource of the set of RS resources for use in prediction-based beam reporting and/or prediction-based beam switching when the network entity 120 provides a target TCI state. The prediction results of the model may include, without limitation, for example at least one of: data representative of an indication of at least one predicted beam and/or associated RS resource; at least one of data representative of a predicted quality metric associated with the at least one predicted beam or a predicted model performance metric associated with the at least one predicted beam.

A fourth operation 4.4 may include the user terminal 122 reporting data representative of at least one predicted beam to the network entity 120, which may include an indication of the particular RS resource(s) associated with the at least one predicted beam, and/or predicted quality metric or predicted model performance metric associated with the at least one predicted beam.

After reporting, as an option, operation 4.2 may be extended to optional operation 4.2', which may comprise the user terminal 122 commencing measurement of the RS resources associated with at last one predicted beam of the Predicted Set 314. Operations 4.4 and 4.2' may be performed in any order or simultaneously. In some example embodiments, the fourth operation 4.4 may be deferred until after optional operation 4.2', and/or performed before optional operation 4.2'.

A fifth operation 4.5 may comprise the network entity 120 determining a target TCI state corresponding to the at least one predicted beam (and/or quality metrics or model performance accuracy metrics), where the target TCI state includes an indication of the particular RS resource(s) associated with the at least one predicted beam.

A sixth operation 4.6 may comprise the network entity 120 transmitting to the user terminal 122 an indication of the target TCI state, including an indication of the particular RS resource(s) associated with the at least one predicted beam.

A seventh operation 4.7 may comprise the user terminal 122 receiving the indication of the target TCI state.

An eighth operation 4.8 may comprise the user terminal 122 determining whether the indicated target TCI state is known or unknown. This may include the user terminal determining, based on one or more conditions 316 associated with at least one of: the at least predicted beam and the measured first set of RS resources, whether the target TCI state is known or unknown.

For example, the user terminal 122 may implement the conditions 316 as described with reference to FIG. 3 in the determination of whether the target TCI state is known or unknown using, without limitation, for example, measurements of the first set 310 of reference signal resources, the prediction of the quality metrics and/or model performance (or accuracy) metrics of the predicted beams in the Predicted Set 314; determining monitoring accuracy metrics associated with previous and current predicted beams of the Predicted Set 314; and/or measurements of the reference signal resources of the predicted beams in the Predicted Set 314; and the like, combinations thereof, modifications thereto, and/or as the application demands.

Using the conditions 316, the user terminal 122 may therefore determine that the target TCI state is known.

A ninth operation 4.9 may include the user terminal 122 switching to the target TCI state if the target TCI state is known.

The switching to the target TCI state may performed within a time period of known TCI state switching delay associated with the target TCI state. The network entity 120 may be configured to switch to the target TCI state at the same time.

As an optional embodiment or example embodiment to operations 4.1 to 4.9, a modification may be made in which, in addition to the eighth operation 4.8, an optional modified eighth operation 4.8' may comprise the network entity 120 being configured to determine whether the indicated target TCI state is known or unknown. This may include the network entity 120 determining, based on the one or more conditions 316 associated with at least one of: the at least predicted beam, configured first set 310 of RS resource, and/or, the measured first set 310 of RS resources if reported by the user terminal 122, whether the target TCI state is known or unknown.

For example, the network entity 120 may implement the one or more conditions 316 as described with reference to FIG. 3 in the determination of whether the target TCI state is known or unknown, or likely to be known or unknown by the user terminal 122 using, without limitation, for example, predicted beams of the Predicted Set 314, measurements of the first set 310 of RS resources if reported by the user terminal 122, the prediction of the quality metrics and/or model performance (or accuracy) metrics of the predicted beams in the Predicted Set 314 if reported by the user terminal 122; determining monitoring accuracy metrics associated with previous and current predicted beams of the Predicted Set 314 if reported by the user terminal; and/or measurements of the RS resources of the predicted beams in the Predicted Set 314 (e.g., operation 4.2') if reported by the user terminal 122; and the like, combinations thereof, modifications thereto, and/or as the application demands. Using the conditions 316, the network entity 120 may therefore determine that the target TCI state is known.

In addition to the optional operation 4.8', an optional ninth operation 4.9 may be included in which the network entity 120 switches to the target TCI state if the target TCI state is known. As an option, the switching to the target TCI state may performed within a time period of known TCI state switching delay associated with the target TCI state. Thus, network entity 120 may be configured to switch to the target TCI state at the same time as the user terminal 122.

In some embodiments, the user terminal 122 and/or network entity 120 may switch to the target TCI state (e.g., within or after a time period of a known TCI state switch delay) if the indicated target TCI is known.

In some example embodiments, the switching to the target TCI state may be performed within (or after) a time period based on a determination indicating the target TCI state is known. For example, the time period may be based on a known TCI state switching delay associated with the target TCI state when the target TCI state is known. In an example, switching to the target TCI state within the time period based on the determination the target TCI state is known may further include one or more of: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

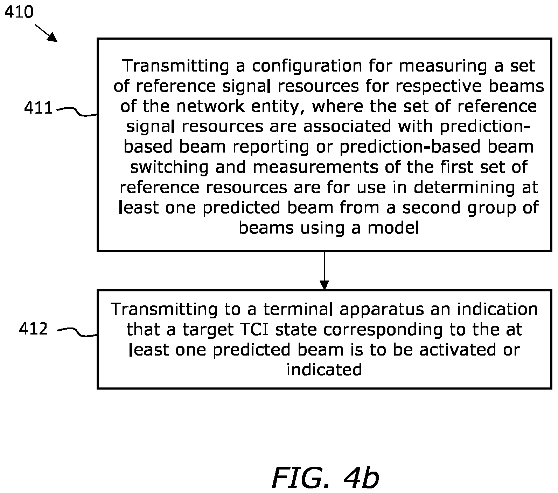

FIG. 4b is a flow diagram indicating operations 410 according to one or more example embodiments. The operations 410 may be performed in hardware, software, firmware, or a combination thereof. For example, the operations 410 may be performed individually, or collectively, by a means, wherein the means may comprise at least one processor and at least one memory storing instructions that, when executed by the at least one processor, cause the performance of the operations. For example, the operations 410 may be performed by a network apparatus, such as the network entity 120 of FIG. 1.

A first operation 411 may comprise transmitting, to a user terminal 122, a configuration for measuring a set of RS resources for respective beams of the network entity 120 for use in determining at least one predicted beam, where the configured set of RS resources are associated with prediction-based beam reporting or prediction-based beam switching.

A second operation 412 may comprise transmitting, to the user terminal 122, an indication that a target TCI state corresponding to the at least one predicted beam is to be activated or indicated.

The operations 410 may further include the network entity 120 receiving, from the user terminal 122, an indication of at least one predicted beam generated by the user terminal 122 inputting measurements of the first set of RS resources to the model, where the model performs an inference operation for providing data representative of the indication of the at least one predicted beam.

In some example embodiments, the target TCI state is, whether or not known or unknown, is determined, based on at least one of: the at least one predicted beam and the first set 310 of RS resources, and switching by user terminal 122 and/or network entity 120 to the target TCI state within a time period based on a determination indicating the target TCI state is known.

In some embodiments, the network entity 120 may be configured to include determining, based on one or more conditions 316 associated with at least one of: the at least one predicted beam and the configured first set of reference signal resources (and/or measured first set of RS resources if reported by the user terminal 122), whether the target TCI state is known or unknown, and switching to the target TCI state within a time period based on a determination indicating the target TCI state is known. The one or more conditions may be based on the various one or more conditions 316 as described with reference to FIG. 3.

As described herein, the user terminal 122 may be configured for determining, based on one or more conditions associated with at least one of: the at least one predicted beam and the measured first set of RS resources, whether the target TCI state is known or unknown, and switching to the target TCI state within a time period based on a determination indicating the target TCI state is known. The one or more conditions may be based on the various one or more conditions 316 as described with reference to FIG. 3.

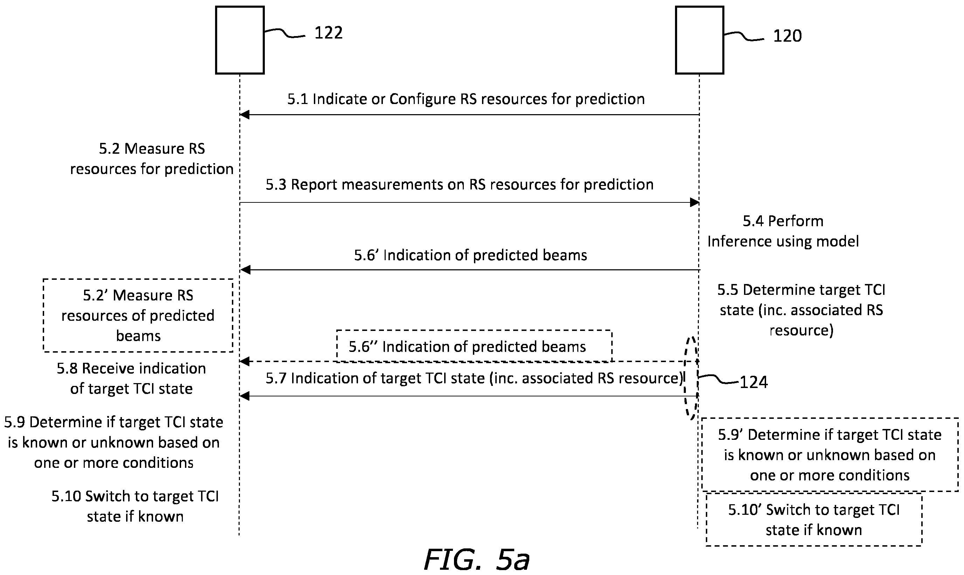

FIG. 5a illustrates a signalling and processing diagram according to some example embodiments, for the case that the network entity 120 performs the inference operation using the model 312.

The first to second operations 5.1 to 5.2 may correspond to the first to second operations 4.1 to 4.2 described above in relation to FIG. 4.

A third operation 5.3 may include the user terminal 122 reporting measurements on the first set 310 of RS resources for use in prediction / inference operation to the network entity 120.

A fourth operation 5.4 may include the network entity 120 performing an inference operation using the measurement results of the first set 310 of RS resources reported in the third operation 5.3. The inference operation is performed by the network entity 120 using the model configured for predicting at least one predicted beam and/or associated RS resource of the set of RS resources for use by the network entity 120 in determining a target TCI state associated with at least one prediction beam of the Predicted Set 314. The prediction results of the model may include, without limitation, for example at least one of: data representative of an indication of at least one predicted beam and/or associated RS resource; at least one of data representative of a predicted quality metric associated with the at least one predicted beam, a predicted model performance metric associated with the at least one predicted beam, a monitoring accuracy metric associated with the at least one predicted beam and/or any other required metric and the like that enables the user terminal 122 to use the one or more conditions 316 as described with reference to FIG. 3 for determining whether the target TCI state is known or unknown.

A fifth operation 5.5 may comprise the network entity 120 determining a target TCI state corresponding to the at least one predicted beam, wherein the target TCI state includes an indication of the particular RS resource(s) associated with the at least one predicted beam.

A sixth operation 5.6' may include the network entity 120 reporting data representative of the prediction results to the user terminal 122. This may include, without limitation, for example data representative of at least one of: at least one predicted beam to the user terminal 122, an indication of the particular RS resource(s) associated with the at least one predicted beam, a predicted quality metric or predicted model performance metric associated with the at least one predicted beam, a monitoring accuracy metric associated with the at least one predicted beam and/or any other required metric and/or data and the like that enables the user terminal 122 to use the one or more conditions 316 as described with reference to FIG. 3 for determining whether the target TCI state is known or unknown.

The sixth operation 5.6' may be performed before operation 5.5 and/or after operation 5.5. The sixth operation 5.6' may be performed by the network entity 120 using an explicit messaging using control signalling and/or other type of messaging, or implicitly within another messaging format or type such as the TCI state indication.

A seventh operation 5.7 may comprise the network entity 120 transmitting to the user terminal 122 an indication of the target TCI state, including an indication of the particular RS resource(s) associated with the at least one predicted beam.

As an option, the sixth operation 5.6' may be performed explicitly or implicitly as modified sixth operation 5.6", where the network entity 120 reports data representative of at least one predicted beam to the user terminal 122, which may include, without limitation, for example data representative of an indication of at least one predicted beam and/or associated RS resource; at least one of data representative of a predicted quality metric associated with the at least one predicted beam, a predicted model performance metric associated with the at least one predicted beam, a monitoring accuracy metric associated with the at least one predicted beam and/or any other required metric and the like that enables the user terminal 122 to use the one or more conditions 316 as described with reference to FIG 3 for determining whether the target TCI state is known or unknown. The modified sixth operation 5.6" may be performed by the network entity 120 within the messaging used by operation 5.7 when transmitting the TCI state indication to the user terminal 122.

Alternatively, the sixth operation 5.6' or the modified sixth operation may be performed after operation 5.7.

Eighth, ninth and tenth operations 5.8, 5.9, 5.10 may correspond to the seventh, eighth and ninth operations 4.7, 4.8, 4.9 performed by the user terminal as described above in relation to FIG. 4.

After operations 5.6', 5.6", as an option, once the user terminal 122 has received at least one prediction beam and associated RS resources of the Predicted Set 314 from the network entity 120, operation 5.2 may be extended to operation 5.2', which may comprise the user terminal 122 commencing measurement of the RS resources associated with at least one predicted beam of the Predicted Set 314. Operation 4.2' may be performed at any time after operation 5.6' or 5.6".

The switching to the target TCI state may performed within a time period of known TCI state switching delay associated with the target TCI state. The network entity 120 may be configured to switch to the target TCI state at the same time.

As an optional embodiment or example embodiment to operations 5.1 to 5.9, a modification may be made in which, in addition to the ninth operation 5.9, an optional modified ninth operation 5.9' may comprise the network entity 120 being configured to determine whether the indicated target TCI state is known or unknown. This is because the network entity 120 implements model 312, and where the network entity 120 may have available to it data representative of, without limitation, for example measurements of the first set 310 of RS resources reported to the network entity 120 in operation 5.3; and data representative of an indication of at least one predicted beam of the Predicted Set 314 and/or associated RS resource predicted by the model 312 at the network entity 120 in operation 5.4; and other data that may be computed in operation 5.4 or any other operation at the network entity 120 including, without limitation, for example at least one of data representative of a predicted quality metric associated with the at least one predicted beam, a predicted model performance metric associated with the at least one predicted beam, a monitoring accuracy metric associated with the at least one predicted beam and/or any other required metric and the like that enables the network entity 120 to use the one or more conditions 316 as described with reference to FIG. 3 for determining whether the target TCI state is known or unknown. In operation 5.9', the network entity 120 may be configured for determining, based on the one or more conditions 316 associated with at least one of: the at least predicted beam of the Predicted Set 316 in operation 5.4, configured first set 310 of RS resource (e.g., operation 5.1), and/or, the measured first set 310 of RS resources reported by the user terminal 122 in operation 5.3, whether the target TCI state is known or unknown.

For example, the network entity 120 may implement the one or more conditions 316 as described with reference to FIG. 3 in the determination of whether the target TCI state is known or unknown, or likely to be known or unknown by the user terminal 122 using, without limitation, for example, predicted beams of the Predicted Set 314 predicted by model 312 in operation 5.4, measurements of the first set 310 of RS resources reported by the user terminal 122 in operation 5.3, the prediction of the quality metrics and/or model performance (or accuracy) metrics of the predicted beams in the Predicted Set 314 computed, where necessary, by the network entity 120 in operation 5.5 and/or if reported by the user terminal 122; determining monitoring accuracy metrics associated with previous and current predicted beams of the Predicted Set 314 computed in operation 5.5 and/or using measurements of the RS resources of the predicted beams in the Predicted Set 314 (e.g., operation 5.2') if reported by the user terminal 122 after or during operation 5.2'; and the like, combinations thereof, modifications thereto, and/or as the application demands. Using the conditions 316, the network entity 120 may therefore determine that the target TCI state is known.

In addition to the optional operation 5.9', an optional tenth operation 5.10 may be included in which the network entity 120 switches to the target TCI state if the target TCI state is known. As an option, the switching to the target TCI state may performed within a time period of known TCI state switching delay associated with the target TCI state. Thus, network entity 120 may be configured to switch to the target TCI state at the same time as the user terminal 122.

In some embodiments, the user terminal 122 and/or the network entity 120 may switch to the target TCI state (e.g., within or after a time period of a known TCI state switch delay) if the indicated target TCI is known.

In some example embodiments, the switching to the target TCI state may be performed within (or after) a time period based on a determination indicating the target TCI state is known. For example, the time period may be based on a known TCI state switching delay associated with the target TCI state when the target TCI state is known. In an example, switching to the target TCI state within the time period based on the determination the target TCI state is known may further include one or more of: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

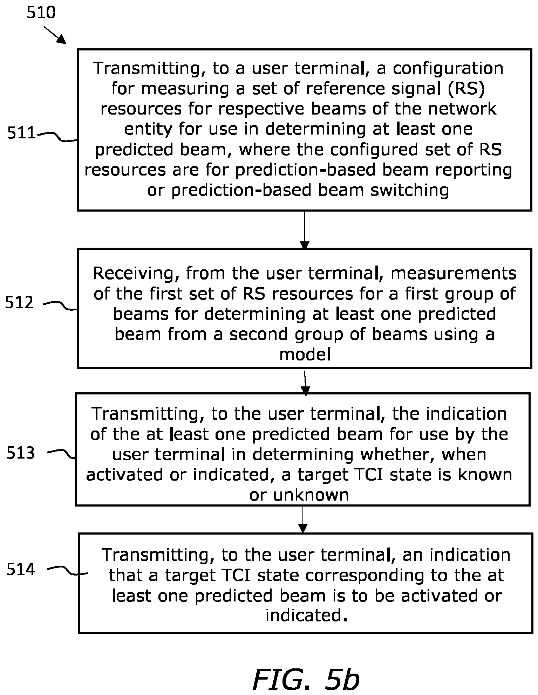

FIG. 5b is a flow diagram indicating operations 510 according to one or more example embodiments. The operations 510 may be performed in hardware, software, firmware, or a combination thereof. For example, the operations 510 may be performed individually, or collectively, by a means, wherein the means may comprise at least one processor and at least one memory storing instructions that, when executed by the at least one processor, cause the performance of the operations. For example, the operations 510 may be performed by a network apparatus, such as the network entity 120 of FIG. 1.

In a first operation 511, transmitting, to a user terminal 122, a configuration for measuring a set of reference signal resources for respective beams of the network entity 120 for use in determining at least one predicted beam, where the configured set of reference signal resources are associated with prediction-based beam reporting or prediction-based beam switching.

In a second operation 512, receiving, from the user terminal 122, measurements of the first set 310 of RS resources for a first group of beams for determining at least one predicted beam from a second group of beams using a model, where the model performs an inference operation for providing data representative of an indication of the at least one predicted beam. The network entity 120 may input the measurements of the first set 310 of RS resources to the model 312, which performs a model inference operation for providing data representative of an indication of the at least one predicted beam.

In a third operation 513, transmitting, to the user terminal 122, the indication of the at least one predicted beam for use by the user terminal 122 in determining, based on one or more conditions associated with at least one of: the at least predicted beam and the measured first set 310 of RS resources, whether a target TCI state, when activated or indicated, is known or unknown, and switch to the target TCI state based on the determination.

In a fourth operation 514, transmitting, to the user terminal, an indication that a target TCI state corresponding to the at least one predicted beam is to be activated or indicated.

In some example embodiments, the target TCI state is, whether or not known or unknown, is determined, based on at least one of: the at least one predicted beam and the first set 310 of RS resources, and switching by user terminal 122 and/or network entity 120 to the target TCI state based on the determination that target TCI state is known.

In some example embodiments, the target TCI state, whether or not known or unknown, is determined, based on at least one of: the at least one predicted beam and the first set 310 of RS resources, and switching by user terminal 122 and/or network entity 120 to the target TCI state within a time period based on a determination indicating the target TCI state is known.

In some embodiments, the network entity 120 may be configured to include determining, based on one or more conditions 316 associated with at least one of: the at least one predicted beam and the configured first set of reference signal resources (and/or measured first set of RS resources when reported by the user terminal 122 in operation 512), whether the target TCI state is known or unknown, and switching to the target TCI state within a time period based on a determination indicating the target TCI state is known. The one or more conditions may be based on the various one or more conditions 316 as described with reference to FIG. 3.

In some embodiments, the user terminal 122 may be configured for determining, based on one or more conditions 316 as described with reference to FIG. 3 and/or FIG. 5a that are associated with at least one of: the at least one predicted beam and the measured first set of RS resources, whether the target TCI state is known or unknown, and switching to the target TCI state within a time period based on a determination indicating the target TCI state is known.

As described herein, the user terminal 122 may be configured for determining, based on one or more conditions 316 associated with at least one of: the at least one predicted beam and the measured first set of RS resources, whether the target TCI state is known or unknown, and switching to the target TCI state within a time period based on a determination indicating the target TCI state is known. The one or more conditions may be based on the various one or more conditions 316 as described with reference to FIG. 3.

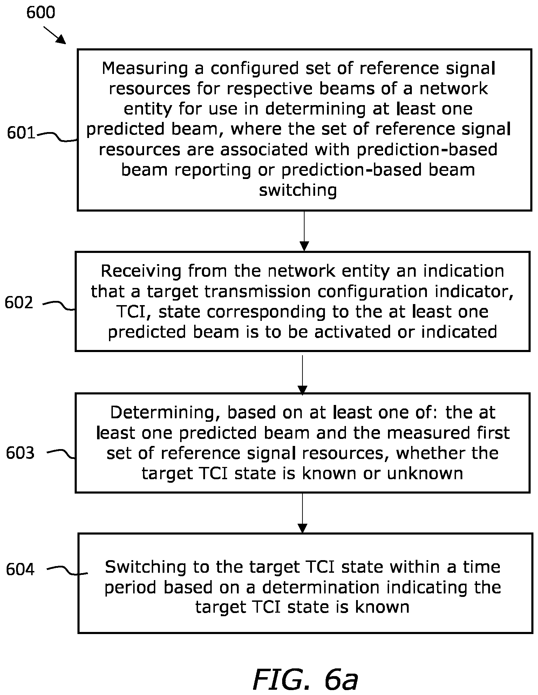

FIG. 6a is a flow diagram indicating operations 600 according to one or more example embodiments. The operations 600 may be performed in hardware, software, firmware, or a combination thereof. For example, the operations 600 may be performed individually, or collectively, by a means, wherein the means may comprise at least one processor and at least one memory storing instructions that, when executed by the at least one processor, cause the performance of the operations. For example, the operations 600 may be performed by the user terminal 122, such as the user terminal 122 of FIG. 1.

A first operation 601 may include measuring a first set 310 of RS resources of a configured set of RS sources for respective beams of a network entity 120 for use in determining at least one predicted beam. The configured set of RS resources are associated with prediction-based beam reporting or prediction-based beam switching.

A second operation 602 may include receiving from the network entity 120 an indication that a target TCI state corresponding to the at least one predicted beam is to be activated or indicated.

A third operation 603 may include determining, based on at least one of: the at least one predicted beam and the measured first set of RS resources, whether the target TCI state is known or unknown.

A fourth operation 604 may include switching to the target TCI state within a time period based on a determination indicating the target TCI state is known.

In some example embodiments, the configured set of reference signal resources (hereafter RS resources) may comprise a set of one or more RSs associated with respective beams that the network entity can transmit.

In some example embodiments, feature(s) that are performed based on time periods or time intervals as described in relation to FIGs. 1 - 5b examples of which are applicable also to FIG. 6a.

In some example embodiments, the switching to the target TCI state may be performed within (or after) a time period based on a determination indicating the target TCI state is known. For example, the time period may be based on a known TCI state switching delay associated with the target TCI state when the target TCI state is known. In an example, switching to the target TCI state within the time period based on the determination the target TCI state is known may further include one or more of: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the reference signal resources of the target TCI state.

In some example embodiments, for example, a further operation may comprise determining the predefined time duration as described above and updating, if necessary. The predefined time duration may have time units based on, without limitation, milliseconds, slots, frames, or any other time unit suitable for target TCI state switching. The predefined time duration may be set at N milliseconds, slots or frames, N>0, prior to the TCI state switch indication is received in operation 602.

In some embodiments, the operations 600 may further comprise receiving a configuration for measuring a set of RS resources for respective beams of network entity 120. The configuration may indicate a first set of RS resources of the configured set of RS resources for measurements.

In some embodiments, the operations 600 may further include the user terminal 122 being configured to generate a predicted set of beams of the network entity 120 based on applying (or inputting) the measured first set 310 of RS resources to a model. The model including an inferencing operation for predicting an indication of at least one predicted beam of the network entity 120 that may be used in a TCI state switch. The inferencing operation may further output one or more predicted quality metrics or model performance metrics associated with the at least one predicted beam.

In some embodiments, the operations 600 may further include the user terminal 122 being configured to report a Predicted Set 314 comprising the at least one predicted beam to the network entity 120.

In some embodiments, the operations 600 may further include the user terminal 122 being configured to determine, based on the RS of the predicted beam being in the first set and the RS is associated with an RS of the target TCI state, whether the target TCI state is known or unknown. The determination may be based on one or more conditions associated with at least one of: the at least one predicted beam and/or the measured first set of RS resources. The one or more conditions may include one or more conditions 316 as described with reference to FIG. 3 and/or as described herein. Other determinations of whether the target TCI state is known may include comparing the one or more predicted quality metrics or model performance metrics associated with the at least one predicted beam being above or below a predefined quality metric threshold or model performance metric threshold, respectively.

In some example embodiments, feature(s) that are described in relation to FIGs. 1 - 5b examples are applicable also to FIG. 6a.

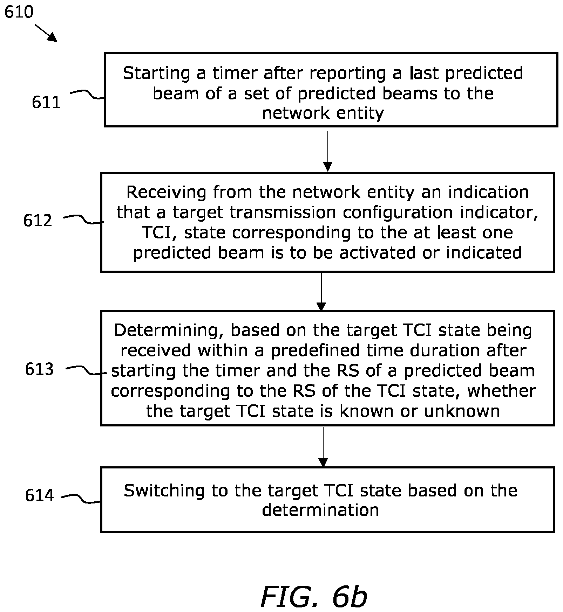

FIG. 6b is a flow diagram indicating operations 610 according to one or more example embodiments. The operations 610 may be performed in hardware, software, firmware, or a combination thereof. For example, the operations 610 may be performed individually, or collectively, by a means, wherein the means may comprise at least one processor and at least one memory storing instructions that, when executed by the at least one processor, cause the performance of the operations. For example, the operations 610 may be performed by the user terminal 122, such as the user terminal 122 of FIG. 1, after the user terminal 122 reports prediction beams from the Prediction Set 314 to the network entity 120.

A first operation 611 may include the user terminal 122 starting a timer after reporting a last predicted beam of the set of Predicted Beams 314 to the network entity 120.

A second operation 612 may include receiving from the network entity 120 an indication that a TCI state corresponding to the at least one predicted beam is to be activated or indicated.

A third operation 613 may include determining, based on the TCI state being received within a predefined time duration after starting the timer and the RS of a predicted beam corresponding to an RS of the target TCI state, whether the target TCI state is known or unknown. This determination may be based on one or more determinations performed in relation to the conditions 316 associated with FIG. 3.

A fourth operation 614 may comprise switching to the target TCI state based the TCI state being received with in the predefined time duration and the determination the TCI state is known.

In some example embodiments, feature(s) that are described in relation to FIGs. 1 - 6a examples are applicable also to FIG. 6b.

In some example embodiments, for example, a further operation may comprise determining the predefined time duration as described above and updating, if necessary. The predefined time duration may have time units based on, without limitation, milliseconds, slots, frames, or any other time unit suitable for target TCI state switching. The predefined time duration may be set at *N* milliseconds, slots or frames, *N>0,* prior to the TCI state switch indication is received in operation 602.

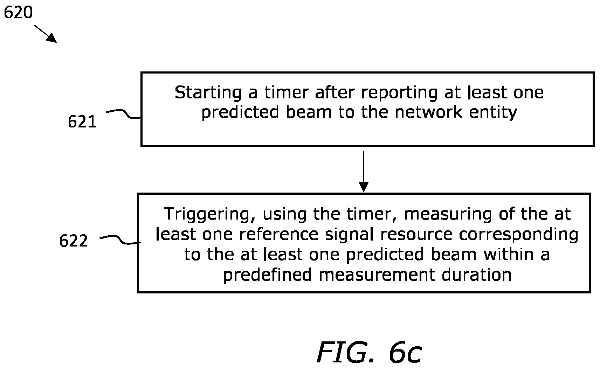

FIG. 6c is a flow diagram indicating operations 620 according to one or more example embodiments. The operations 620 may be performed in hardware, software, firmware, or a combination thereof. For example, the operations 620 may be performed individually, or collectively, by a means, wherein the means may comprise at least one processor and at least one memory storing instructions that, when executed by the at least one processor, cause the performance of the operations. For example, the operations 620 may be performed by the user terminal 122 after the user terminal knows at least one prediction beam from the Prediction Set 314.

A first operation 621 may include the user terminal 122 starting a timer after reporting at least one predicted beam to the network entity.

A second operation 621 may include triggering, using the timer, measuring of the at least one RS resources corresponding to the at least one predicted beam within a predefined measurement time duration.

In some embodiments, the second operation 621, the measuring of the at least one of the RS resource associated with the at least one of the predicted beams may be performed based on one or more from the group of: measuring a RS resource associated with at least one predicted beam in a first slot of the particular RS resource occurring after reporting the predicted beam associated with the RS resource; or measuring a RS resource associated with at least one predicted beam within a predetermined or specified time period after reporting the predicted beam associated with the RS resource.

In some embodiments, the second operation 621, after measuring the RS associated with the at least one predicted beam, performing prediction-based beam switching based on whether the target TCI state is known.

In some embodiments, the measurement of the at least one measured RS resource is an L1 physical layer measurement. Alternatively, or additionally, the L1 physical layer measurement is a RSRP measurement.

In some example embodiments, feature(s) as described in relation to FIGs. 1 - 6b examples are applicable also to FIG. 6c.

In some example embodiments, for example, a further operation may comprise determining the predefined measurement time duration as described above and updating, if necessary. In some example embodiments, the predefined measurement time duration is based on the first slot of the RS after reporting the corresponding predicted beam or based on within a predetermined or specified time period after reporting the predicted beams of the Predicted Set 314. The predefined measurement time duration may have time units based on, without limitation, milliseconds, slots, frames, or any other time unit suitable for target TCI state switching. The predefined measurement time duration may be set at $X$ milliseconds, slots or frames, $X>0$. The measurement is an L1 measurement or L1 RSRP measurement.

In some example embodiments, feature(s) as described in relation to FIGs. 1 - 6b examples are applicable also to FIG. 6c.

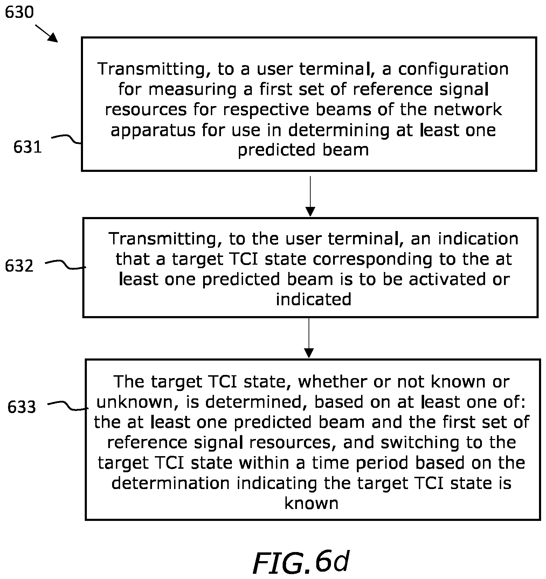

FIG. 6d is a flow diagram indicating operations 630 according to one or more example embodiments. The operations 630 may be performed in hardware, software, firmware, or a combination thereof. For example, the operations 630 may be performed individually, or collectively, by a means, wherein the means may comprise at least one processor and at least one memory storing instructions that, when executed by the at least one processor, cause the performance of the operations. For example, the operations 630 may be performed by a network apparatus, such as the network entity 120 of FIG. 1.

A first operation 631 may include the network entity 120 transmitting, to a user terminal 122, a configuration for measuring a first set of reference signal resources for respective beams of the network apparatus for use in determining at least one predicted beam. The configured set of reference signal resources are associated with prediction-based beam reporting or prediction-based beam switching.

A second operation 632 may include the network entity 120 transmitting, to the user terminal 122, an indication that a target TCI state corresponding to the at least one predicted beam is to be activated or indicated.

A third operation 633 may include the network entity 120, switching to the target TCI state within a time period. This may be within a time period based on a determination indicating the target TCI state is known. The target TCI state, whether or not known or unknown, is determined, based on at least one of: the at least one predicted beam and the first set of reference signal resources.

In some embodiments of operations 630, the user terminal 122 is configured for determining, based on one or more conditions 316 associated with at least one of: the at least one predicted beam of the Predicted Set 314 and the measured first set 310 of RS, whether the target TCI state is known or unknown, and switching to the target TCI state within a time period based on a determination indicating the target TCI state is known. The one or more conditions 316 may be based on those various one or more conditions 316 as described with reference to FIGs. 3 to 5b, combinations thereof, modifications thereto, as described herein and/or as the application demands.

The second or third operations 632 or 633 may further include the network entity 120 determining, based on one or more conditions 316 associated with at least one of: the at least one predicted beam and the configured first set 310 of RS resources and/or measured first set of RS resources if reported by the user terminal 122, whether the target TCI state is known or unknown, and switching to the target TCI state within a time period based on a determination indicating the target TCI state is known. The one or more conditions 316 may be based on those various one or more conditions 316 as described with reference to FIGs. 3 to 5b, where the network entity 120 is configured to implement the one or more conditions 316. As well, the user terminal 122 may use the one or more conditions 316 as described with reference to FIGs. 3 to 5b for determining the TCI state to be known or unknown.

In some example embodiments, the operation 633 may further include the network entity 120 switching to the target TCI state within the time period based on the determination the target TCI state is known. The user terminal 122 may also switch to the target TCI state within the same time period based on its determination the target TCI state is known.

For example, the operations 633 may further include the network entity 120 switching based on: performing the TCI state switch within the time period according to the known target TCI state, where the time period is calculated based on omitting an L1-RSRP measurement time period required for L1-RSRP measurement of the RS resources of the target TCI state; or performing the TCI state switch within the time period according to the known target TCI state, where the time period is calculated based on determining that at least one L1-RSRP measurement or measurement sample has been obtained in relation to the RS resources of the target TCI state.

In some example embodiments, the operations 630 may include the model 312 being implemented by the user terminal 122 in which the operations 630 further includes the network entity 120 receiving, from the user terminal 122, an indication of at least one predicted beam generated by the user terminal 122 inputting measurements of the first set 310 of RS resources to the model 312, where the model 312 performs an inference operation for providing data representative of the indication of the at least one predicted beam.

In other example embodiments, the operations 630 may include the model 312 being implemented by the network entity 120 in which the operations 630 further includes the network entity 120 receiving, from the user terminal 122, measurements of the first set 310 of RS resources for a first group of beams for determining at least one predicted beam from a second group of beams using the model 312, where the model 312 performs an inference operation for providing data representative of an indication of the at least one predicted beam of the Predicted Set 314.

In some embodiments, the operations 630 may further include the network entity 120 inputting data representative of the measured first set 310 of RS resources (e.g., received from the user terminal 122 or even measured by the network entity 120) to the model. The operations 630 may further include the network entity 120 reporting data representative of the indication of the at least one predicted beam to the user terminal 122.

The operations 630 of the network entity 120 may further include transmitting, to the user terminal 122, data representative of the indication of the at least one predicted beam for use by the user terminal 122 in determining, based on one or more conditions 316 associated with at least one of: the at least one predicted beam and the measured first set 310 of RS resources, whether the target TCI state is known or unknown, and switch to the target TCI state based on the determination. The one or more conditions 316 may be based on those various one or more conditions 316 as described with reference to FIGs. 3 to 5b.

The operations 630 of the network entity 120 may further include performing a determination based on one or more conditions 316 associated with at least one of: the at least one predicted beam and the configured first set 310 of RS resources and/or measured first set of RS resources if reported by the user terminal 122, whether the target TCI state is known or unknown, and switching to the target TCI state within a time period based on a determination indicating the target TCI state is known. The one or more conditions 316 may be based on those various one or more conditions 316 as described with reference to FIGs. 3 to 5b, where the network entity 120 is configured to implement the one or more conditions 316. As well, the user terminal 122 may use the one or more conditions 316 as described with reference to FIGs. 3 to 5b for determining the TCI state to be known or unknown.

In some example embodiments, feature(s) that are described in relation to FIGs. 1 - 6c examples are applicable also to FIG. 6d.

Example Apparatus

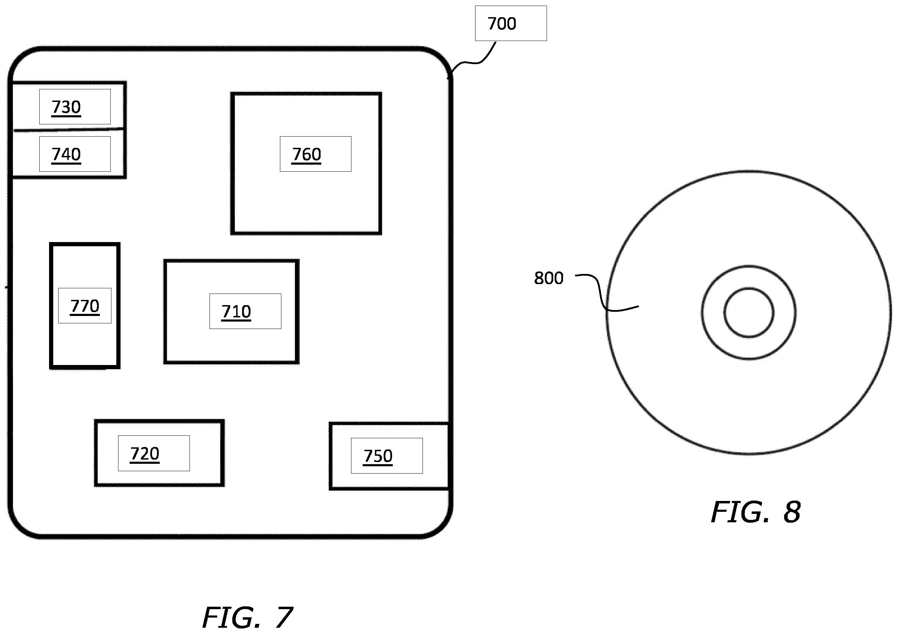

FIG. 7 illustrates an example apparatus 700 capable of supporting at least some embodiments. Illustrated is a device 700, which may comprise the user terminal 122 described above or a device configured to control the functioning thereof. Alternatively, the device 700 may comprise a network entity 120 described above. Comprised in device 700 is a processor 710, which may comprise, for example, a single- or multi-core processor wherein a single-core processor comprises one processing core and a multi-core processor comprises more than one processing core. The processor 710 may comprise, in general, a control device. The processor 710 may comprise more than one processor. The processor 710 may be a control device. A processing core may comprise, for example, a Cortex-A8 processing core manufactured by ARM Holdings, or a Steamroller processing core produced by Advanced Micro Devices Corporation. The processor 710 may comprise at least one Qualcomm Snapdragon and/or Intel Atom processor. The processor 710 may comprise at least one Application-Specific Integrated Circuit, ASIC. The processor 710 may comprise at least one Field-Programmable Gate Array, FPGA. The processor 710 may be means for performing method steps in device 800. The processor 710 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the network entity 120, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 700 may comprise a memory 720. The memory 720 may comprise random access memory and/or permanent memory. The memory 720 may comprise at least one RAM chip. The memory 720 may comprise solid-state, magnetic, optical and/or holographic memory, for example. The memory 720 may be at least in part accessible to processor 710. The memory 720 may be at least in part comprised in processor 710. The memory 720 may be means for storing information. The memory 720 may comprise computer instructions that processor 710 is configured to execute. When computer instructions configured to cause the processor 710 to perform certain actions are stored in the memory 720, and the device 700 overall is configured to run under the direction of the processor 710 using computer instructions from the memory 720, the processor 710 and/or its at least one processing core may be considered to be configured to perform said certain actions. The memory 720 may be at least in part comprised in the processor 710. The memory 720 may be at least in part external to the device 700 but accessible to the device 700.

The device 700 may comprise a transmitter 730. The device 700 may comprise a receiver 740. The transmitter 730 and the receiver 740 may be configured to transmit and receive, respectively, information in accordance with at least one cellular or non-cellular standard.

The transmitter 730 may comprise more than one transmitter. The receiver 740 may comprise more than one receiver. The transmitter 730 and/or the receiver 740 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 700 may comprise a Near-Field Communication, NFC, transceiver 750. The NFC transceiver 750 may support at least one NFC technology, such as NFC, Bluetooth, Wibree or similar technologies.

The device 700 may comprise a User Interface, UI, 760. The UI 760 may comprise at least one of a display, a keyboard, a touchscreen, a vibrator arranged to signal to a user by causing device 700 to vibrate, a speaker and a microphone. A user may be able to operate the device 700 via the UI 760, for example to accept incoming telephone calls, to originate telephone calls or video calls, to browse the Internet, to manage digital files stored in memory 720 or on a cloud accessible via the transmitter 730 and the receiver 740, or via NFC transceiver 750, and/or to play games.

The device 700 may comprise or be arranged to accept a user identity module 770. The user identity module 770 may comprise, for example, a Subscriber Identity Module, SIM, card installable in device 700. The user identity module 770 may comprise information identifying a subscription of a user of device 700. The user identity module 770 may comprise cryptographic information usable to verify the identity of a user of device 700 and/or to facilitate encryption of communicated information and billing of the user of the device 700 for communication effected via device 700.

The processor 710 may be furnished with a transmitter arranged to output information from processor 710, via electrical leads internal to the device 700, to other devices comprised in the device 700. Such a transmitter may comprise a serial bus transmitter arranged to, for example, output information via at least one electrical lead to the memory 720 for storage therein. Alternatively to a serial bus, the transmitter may comprise a parallel bus transmitter.

Likewise, the processor 710 may comprise a receiver arranged to receive information in

The processor 710, via electrical leads internal to the device 700, from other devices comprised in the device 700. Such a receiver may comprise a serial bus receiver arranged to, for example, receive information via at least one electrical lead from the receiver 740 for processing in the processor 710. Alternatively to a serial bus, the receiver may comprise a parallel bus receiver.

The device 700 may comprise further devices not illustrated in FIG. 7. For example, where the device 700 comprises a smartphone, it may comprise at least one digital camera. Some devices 700 may comprise a back-facing camera and a front-facing camera, wherein the back-facing camera may be intended for digital photography and the front-facing camera for video telephony. The device 700 may comprise a fingerprint sensor arranged to authenticate, at least in part, a user of the device 700. In some embodiments, the device 700 lacks at least one device described above. For example, some devices 700 may lack an NFC transceiver 750 and/or user identity module 770.

The processor 710, memory 720, transmitter 730, receiver 740, NFC transceiver 750, UI 760 and/or user identity module 770 may be interconnected by electrical leads internal to the device 700 in a multitude of different ways. For example, each of the aforementioned devices may be separately connected to a master bus internal to the device 700, to allow for the devices to exchange information. However, as the skilled person will appreciate, this is only one example and depending on the embodiment various ways of interconnecting at least two of the aforementioned devices may be selected without departing from the scope of the present invention.

FIG. 8 shows a non-transitory media 800 according to some embodiments. The non-transitory media 800 is a computer readable storage medium. It may be e.g., a CD, a DVD, a USB stick, a blue ray disk, etc. The non-transitory media 800 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular

### Claims

**1.** An apparatus, comprising:

means for measuring (4.2; 5.2) a first set of reference signal resources of a configured set of reference signal resources for respective beams of a network entity (120) for use in determining at least one predicted beam, wherein the configured set of reference signal resources are associated with prediction-based beam reporting or prediction-based beam switching;
means for receiving (4.6; 5.7) from the network entity (120) an indication that a target transmission configuration indicator, TCI, state corresponding to the at least one predicted beam is to be activated or indicated;
means for determining (4.8; 5.9), based on at least one of: the at least one predicted beam and the measured first set of reference signal resources, whether the target TCI state is known or unknown; and
means for switching (4.9; 5.10) to the target TCI state within a time period based on a determination indicating the target TCI state is known.

**2.** The apparatus of claim 1, wherein
the configured set of reference signal resources are configured by the network entity.

**3.** The apparatus of claims 1 or 2, further comprising:
means for receiving from the network entity a message for triggering the apparatus to perform the prediction-based beam reporting or the prediction-based beam switching, wherein the measuring is performed at or after receiving the message.

**4.** The apparatus of any of claims 1 to 3, wherein
the means for measuring is configured to:
measure the first set of reference signal resources for a first group of beams for determining the at least one predicted beam from a second group of beams using a model, wherein the model performs an inference operation for providing data representative of an indication of the at least one predicted beam.

**5.** The apparatus of claim 4, further comprising:

means for inputting data representative of the measured first set reference signal resources to the model; and
means for reporting data representative of the indication of the at least one predicted beam to the network entity, wherein at least one reference signal resource of the configured set of reference signal resources is associated with the at least one predicted beam; and
as an option, the apparatus, further comprising:
means for reporting the measured first set reference signal resources to the network entity for input by the network entity to the model.

**6.** The apparatus of claim 5, wherein the means for determining whether the target TCI state is known or unknown, further comprising:

means for determining that one or more predicted quality metrics of one or more reference signal resources associated with corresponding reported predicted beams are greater than or equal to a preconfigured or predefined quality threshold level; and

in response to determining that at least one of the one or more predicted quality metrics of said one or more reference signal resources associated with corresponding reported predicted beams is greater than or equal to the preconfigured or predefined quality threshold level, determining that the target TCI state is known when said one or more reference signal resources corresponds to a reference signal resource associated with the target TCI state; and

as an option, wherein the quality metric comprises one or more from the group of:

reference signal received power, RSRP;
L1 physical layer RSRP, L1-RSRP;
signal to noise ratio, SNR, of a reference signal resource;
any other quality metric associated with a reference signal resource.

7. The apparatus of claim 6, wherein the means for determining whether the target TCI state is known or unknown, further comprising:

means for determining that one or more current model performance metrics corresponding to one or more of the reported predicted beams associated with one or more reference signal resources, respectively, are greater than or equal to a preconfigured or predefined model performance threshold level;

in response to determining that at least one of the one or more current model performance metrics of said one or more of the reported predicted beams associated with one or more reference signal resources, respectively, is greater than or equal to the preconfigured or predefined model performance threshold level, determining that the target TCI state is known when said one or more reference signal resources corresponds to a reference signal resource associated with the target TCI state; and

as an option, wherein the model performance metric comprises one or more from the group of:

model prediction accuracy metrics;
precision and recall metrics;
area under the curve receiver operating curve, AUC-ROC, metrics;
model confidence metric;
probability score metric;

any other model performance metric for evaluating the prediction performance of the model.

8. The apparatus of any preceding claim, wherein the means for switching to the target TCI state within the time period based on the determination the target TCI state is known further comprising one or more of:

performing the TCI state switch within the time period according to the known target TCI state, wherein the time period is calculated based on omitting an L1-RSRP measurement time period required for L1-RSRP measurement of the reference signal resources of the target TCI state; or

performing the TCI state switch within the time period according to the known target TCI state, wherein the time period is calculated based on determining that at least one L1-RSRP measurement or measurement sample has been obtained in relation to the reference signal resources of the target TCI state.

9. The apparatus of any preceding claim, wherein, when the apparatus is configured to perform prediction-based beam reporting or prior to prediction-based beam switching, the means for measuring is further configured to:

trigger measuring, after reporting data representative of an indication of the one or more predicted beams, of at least one of the reference signal resources associated with at least one of the predicted beams, wherein said measuring of the at least one of the reference signal resource associated with the at least one of the predicted beams is performed based on one or more from the group of:

measuring a reference signal resource associated with at least one predicted beam in a first slot of the particular reference signal resource occurring after reporting the predicted beam associated with the reference signal resource; or

measuring a reference signal resource associated with at least one predicted beam within a predetermined or specified time period after reporting the predicted beam associated with the reference signal resource; and

as an option, wherein
after measuring the reference signal associated with the at least one predicted beam, performing prediction-based beam switching based on whether the target TCI state is known.

10. The apparatus of any preceding claim, wherein:

the measurement of the at least one measured reference signal resource is an L1 physical layer measurement; or
the L1 physical layer measurement is a reference signal resource received power, RSRP, measurement.

11. The apparatus of any preceding claim, wherein:
when the apparatus is configured to perform prediction-based beam reporting, the means for determining whether the target TCI state is known or unknown, further comprising:

means for determining that a reference signal resource of the first set is associated with a corresponding reported predicted beam; and
means for determining that the target TCI state is known when said reference signal resource of the first set of reference signals corresponds to a reference signal resource associated with the target TCI state.

12. A network apparatus, comprising:

means for transmitting (4.1; 5.1), to a terminal apparatus (122), a configuration for measuring a first set of reference signal resources for respective beams of the network apparatus (120) for use in determining at least one predicted beam, wherein the configured set of reference signal resources are associated with prediction-based beam reporting or prediction-based beam switching; and
means for transmitting (4.6; 5.7), to the terminal apparatus (122), an indication that a target transmission configuration indicator, TCI, state corresponding to the at least one predicted beam is to be activated or indicated;
wherein the target TCI state is, whether or not known or unknown, determined based on at least one of: the at least one predicted beam and the first set of reference signal resources, and switching to the target TCI state within a time period based on a determination indicating the target TCI state is known.

13. A method, comprising:

measuring (601) a first set of reference signal resources of a configured set of reference signal resources for respective beams of a network entity (120 for use in determining at least one predicted beam, wherein the configured set of reference signal resources are associated with prediction-based beam reporting or prediction-based beam switching;
receiving (602) from the network entity (120) an indication that a target transmission configuration indicator, TCI, state corresponding to the at least one predicted beam is to be activated or indicated;
determining (603), based on at least one of: the at least one predicted beam and the measured first set of reference signal resources, whether the target TCI state is known or unknown; and
switching (604) to the target TCI state within a time period based on a determination indicating the target TCI state is known.

14. A method, comprising:

transmitting (631), to a terminal apparatus (122), a configuration for measuring a first set of reference signal resources for respective beams of the network apparatus (120) for use in determining at least one predicted beam, wherein the configured set of reference signal resources are associated with prediction-based beam reporting or prediction-based beam switching; and
transmitting (632), to the terminal apparatus (122), an indication that a target transmission configuration indicator, TCI, state corresponding to the at least one predicted beam is to be activated or indicated;
wherein the target TCI state is, whether or not known or unknown, determined based on at least one of: the at least one predicted beam and the first set of reference signal resources, and switching to the target TCI state within a time period based on a determination indicating the target TCI state is known.

15. A computer-readable medium comprising instruction code stored thereon which, when executed by one or more processors (710), causes the one or more processors (710) to perform the method of claims 13 or 14.

**FIG. 1**

EP 4 597 872 A1

200

201 — Receiving a configuration for measuring a set of reference signal resources for respective beams of a network entity, where the set of reference signal resources are associated with prediction-based beam reporting or prediction-based beam switching

202 — Measuring a first set of the reference signal resources for determining at least one predicted beam using a model configured to perform an inference operation for providing data representative of an indication of the at least one predicted beam

203 — Receiving from the network entity an indication that a target transmission configuration indicator, TCI, state corresponding to the at least one predicted beam is to be activated or indicated

204 — Determining, based on one or more conditions associated with at least one of: the at least one predicted beam and the measured first set of reference signal resources, whether the target TCI state is known or unknown

205 — Switching to the target TCI state based on the determination

*FIG. 2*

310 First Set

312

314 Predicted Set

Beam #i : RS#i
Beam #j : RS#j
...

Measurement(s)

Prediction

Beam #4 : RS#4
...
Beam #k : RS #k
...
Beam #N : RS#N

Indication of Target TCI
State including RS
corresponding to
Predicted Beam #4 : RS #4

316

One or more Conditions:
a) Quasi-Colocation source RS in First Set;
b) Measured quality metrics for RS in First Set;
c) Predicted/measured quality metrics for RS in Predicted Set;
d) Monitoring metrics for RS in Predicted Set; and/or
e) Model performance accuracy metrics for RS in Predicted Set

Target TCI State
Known

318

*FIG. 3*

EP 4 597 872 A1

FIG. 4a

EP 4 597 872 A1

410

411 — Transmitting a configuration for measuring a set of reference signal resources for respective beams of the network entity, where the set of reference signal resources are associated with prediction-based beam reporting or prediction-based beam switching and measurements of the first set of reference resources are for use in determining at least one predicted beam from a second group of beams using a model

412 — Transmitting to a terminal apparatus an indication that a target TCI state corresponding to the at least one predicted beam is to be activated or indicated

*FIG. 4b*

EP 4 597 872 A1

FIG. 5a

510

511

Transmitting, to a user terminal, a configuration for measuring a set of reference signal (RS) resources for respective beams of the network entity for use in determining at least one predicted beam, where the configured set of RS resources are for prediction-based beam reporting or prediction-based beam switching

512

Receiving, from the user terminal, measurements of the first set of RS resources for a first group of beams for determining at least one predicted beam from a second group of beams using a model

513

Transmitting, to the user terminal, the indication of the at least one predicted beam for use by the user terminal in determining whether, when activated or indicated, a target TCI state is known or unknown

514

Transmitting, to the user terminal, an indication that a target TCI state corresponding to the at least one predicted beam is to be activated or indicated.

*FIG. 5b*

**600**

601 — Measuring a configured set of reference signal resources for respective beams of a network entity for use in determining at least one predicted beam, where the set of reference signal resources are associated with prediction-based beam reporting or prediction-based beam switching

602 — Receiving from the network entity an indication that a target transmission configuration indicator, TCI, state corresponding to the at least one predicted beam is to be activated or indicated

603 — Determining, based on at least one of: the at least one predicted beam and the measured first set of reference signal resources, whether the target TCI state is known or unknown

604 — Switching to the target TCI state within a time period based on a determination indicating the target TCI state is known

*FIG. 6a*

610

611 — Starting a timer after reporting a last predicted beam of a set of predicted beams to the network entity

612 — Receiving from the network entity an indication that a target transmission configuration indicator, TCI, state corresponding to the at least one predicted beam is to be activated or indicated

613 — Determining, based on the target TCI state being received within a predefined time duration after starting the timer and the RS of a predicted beam corresponding to the RS of the TCI state, whether the target TCI state is known or unknown

614 — Switching to the target TCI state based on the determination

*FIG. 6b*

620

621 —

Starting a timer after reporting at least one
predicted beam to the network entity

622 —

Triggering, using the timer, measuring of the at
least one reference signal resource corresponding
to the at least one predicted beam within a
predefined measurement duration

*FIG. 6c*

630

631

Transmitting, to a user terminal, a configuration for measuring a first set of reference signal resources for respective beams of the network apparatus for use in determining at least one predicted beam

632

Transmitting, to the user terminal, an indication that a target TCI state corresponding to the at least one predicted beam is to be activated or indicated

633

The target TCI state, whether or not known or unknown, is determined, based on at least one of: the at least one predicted beam and the first set of reference signal resources, and switching to the target TCI state within a time period based on the determination indicating the target TCI state is known

*FIG.6d*

FIG. 8

FIG. 7

Europäisches
Patentamt

European
Patent Office

Office européen
des brevets

# EUROPEAN SEARCH REPORT

**Application Number**

EP 25 15 5344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/226003 A1 (QUALCOMM INC [US]; LI QIAOYU [CN] ET AL.) 30 November 2023 (2023-11-30) * paragraph [0085] - paragraph [0134]; figures 5-11 * | 1-15 | INV. H04B7/06 |
| X | WO 2024/007248 A1 (QUALCOMM INC [US]; LI QIAOYU [CN] ET AL.) 11 January 2024 (2024-01-11) * paragraph [0088] - paragraph [0182]; figures 5-9,18-24 * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 28 May 2025 | Bauer, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 597 872 A1

## ANNEX TO THE EUROPEAN SEARCH REPORT
## ON EUROPEAN PATENT APPLICATION NO.

EP 25 15 5344

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | Publication date | Patent family member(s) | | Publication date |
|---|---|---|---|---|
| WO 2023226003 A1 | 30-11-2023 | CN | 119213719 A | 27-12-2024 |
| | | EP | 4533706 A1 | 09-04-2025 |
| | | WO | 2023226003 A1 | 30-11-2023 |
| WO 2024007248 A1 | 11-01-2024 | CN | 119452591 A | 14-02-2025 |
| | | EP | 4552267 A1 | 14-05-2025 |
| | | WO | 2024007248 A1 | 11-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- MAC-CE based downlink TCI state switch delay. *3GPP 38.133 8.15.3*